# EUROPEAN PATENT SPECIFICATION

(11) **EP 2 535 017 B1**
(45) Date of publication and mention of the grant of the patent: **08.08.2018**
(21) Application number: 12171546.0
(22) Date of filing: 11.06.2012
(51) Int. Cl.: A61C 13/265, A61C 13/267

(54) **Partial denture mounting structure and partial denture**
Teilgebissmontagestruktur und Teilgebiss
Structure de montage de prothèse dentaire partielle et prothèse dentaire partielle

(30) Priority: 16.06.2011 JP 2011134154; 16.06.2011 JP 2011134157
(43) Date of publication of application: 19.12.2012
(73) Proprietor: Nakagawa, Hideo, Kashiba-Shi, Nara 6390254 (JP)
(72) Inventor: Nakagawa, Hideo, Kashiba-Shi, Nara 6390254 (JP)
(74) Representative: Prüfer & Partner mbB Patentanwälte · Rechtsanwälte

(56) References cited:
- US-A- 3 716 918
- US-A- 3 768 165
- US-A- 4 764 115
- US-A- 5 203 700
- US-A1- 2004 166 476

## Description

### BACKGROUND OF THE INVENTION

### Field of the Invention

The present invention relates to a highly durable partial denture mounting structure and partial denture which can reduce the load applied to a clasped tooth, which do not require high-level technical proficiency in dentistry at a dental office, and which can simplify the schedule of occlusal adjustment.

### Description of the Related Art

A partial denture is normally made up of an artificial tooth that replaces a missing tooth, a denture base that secures the artificial tooth and comes into close contact with the residual ridge, a clasp that is secured to the denture base and removably engaged with a remaining tooth, and a rest that is formed in one piece with the clasp. The rest and clasp are fitted to a remaining tooth serving as the clasped tooth, and exert the function of stably maintaining the position and posture of the partial denture. The clasp and rest, however, strongly constrain the clasped tooth. When a lateral force acts on the clasp and rest, a large moment will act on the tooth root portion by the principle of leverage, which amplifies the uncomfortable feeling of the wearer and also impairs the health of the clasped tooth. Furthermore, the partial denture suffers poor durability, as it is subject to breakage due to a large stress.

In order to solve the above problems, there has been proposed a partial denture with no rest and a C-shaped clasp, which clasp is fitted to a portion lower than the protruded portion of the clasped tooth, i.e. fitted only to the tooth root that is substantially in contact with the upper rim of the gum (Patent Documents 1 and 2). With this configuration, the fitting force is exerted only on the root portion of the clasped tooth, which greatly reduces the load on the clasped tooth. As compared with the stress applied to the tooth top portion, the stress applied to the tooth root portion can greatly reduce the moment that is generated around the tooth root portion. This alleviates the constraint feeling on the clasped tooth, and also increases the durability of the clasped tooth, as a large moment is not generated around the tooth root portion.

Such a technique of causing the fitting force to be exerted only on the root portion of a clasped tooth has also been adapted to a so-called non-metal denture that uses no metallic clasp. There has been proposed a structure in which a resin fitting portion is fitted only to the root portion of the clasped tooth (Patent Documents 3 and 4).

Besides the above-described trend of reducing the constraint force applied by a clasp onto a clasped tooth and keeping the clasped tooth intact as much as possible, there is another trend of maximizing the function of securing a partial denture by a clasped tooth, as typified by a so-called konus telescope partial denture (Non-Patent Document 1). According to the konus telescope partial denture, generally, the nerve of a clasped tooth is removed in advance, and a metallic cover called an inner crown is fixedly secured to the clasped tooth. The inner crown entirely covers the clasped tooth from its crown portion like a hat. On the other hand, in the partial denture, a metallic cover (outer crown), which is to entirely cover the inner crown, is provided at the location where a clasp was conventionally provided. When the outer crown is fitted onto the inner crown, the partial denture is firmly held in place within the oral cavity. The konus telescope partial denture ensures stable fitting of the partial denture.

[Patent Document 1] Japanese Patent No. 4270578
[Patent Document 2] Japanese Patent No. 4686541
[Patent Document 3] Japanese Patent No. 4309938
[Patent Document 4] Japanese Patent Application Laid-Open No. 2010-201092

[Non-Patent Document 1] Masahiko Kuroda, "Konusukurone (Konus Crown)", Dental Graphic Series, Ishiyaku Publishers Inc., April 15, 2007, 14th impression of the first edition

### SUMMARY OF THE INVENTION

As to the partial denture having a fitting member to be fitted only to the tooth root portion, forming such a fitting member requires a well-experienced diagnosis of the conditions of the oral cavity of a variety of patients. It also requires repeated adjustments using a high-precision denture fabricating technique at a dental laboratory (hereinafter, the "laboratory"). Therefore, there is a demand for a partial denture that can readily be fabricated even by a dentist of ordinary skill and that is durable and excellent in wearing feeling.

As to the konus telescope partial denture, as the outer crown is fitted on the inner crown provided at the clasped tooth to increase the fixing force, the root portion of the clasped tooth suffers a large load (moment) due to the principle of leverage. There have been reported root fracture and other damages to the root portion. Furthermore, for covering the clasped tooth twice, it is necessary to conduct articulation (bite) adjustment to a certain extent at the time of covering the tooth with the inner crown, and conduct final adjustment at the time of covering the tooth with the outer crown. Such delicate and troublesome occlusal adjustments also require a lot of experiences and technical proficiency.

An object of the present invention is to provide a partial denture mounting structure and the partial denture that can reduce the load on a clasped tooth and have good durability, that can clarify the entire fabrication process including occlusal adjustment, and that do not require special intuition or high-level proficiency in dentistry at a dental office.

The present invention provides a partial denture mounting structure which includes an artificial tooth, a denture base that holds the artificial tooth, and a fitting member fixedly secured to the denture base and configured to be fitted to a clasped tooth. In this partial denture mounting structure, the fitting member is a cylindrical member made of cast alloy which, when fitted to the clasped tooth, covers a side peripheral surface of the clasped tooth, making at least a top portion of the clasped tooth exposed from the cylindrical member.

Generally, when an outer crown covers a top corner portion of the tooth, a large moment acts on the tooth root portion due to the principle of leverage, which increases the load on the tooth root portion. In a conventional konus telescope partial denture, the portion corresponding to the fitting member of the present invention was the outer crown (full veneer crown), which naturally resulted in a large stress acting on the top corner portion of the clasped tooth.

According to the present invention, the clasped tooth penetrates through the cylindrical member serving as the fitting member, and the top portion of the clasped tooth is exposed from the cylindrical member. Therefore, stress from the cylindrical fitting member is applied, not to the top or top corner portion, but to the lower portion on the side peripheral surface of the clasped tooth. As a result, the moment around the root of the clasped tooth is greatly reduced compared to the case where the stress is applied to the top portion of the clasped tooth. This can reduce the load on the clasped tooth, and ensure good durability. Furthermore, as compared with the case where the clasped tooth is entirely covered with the covering (outer crown), the uncomfortable feeling in the oral cavity is naturally reduced.

Moreover, occlusal adjustment can be performed on the top portion of the clasped tooth that is exposed from the fitting member, for example at an early stage of fabrication of the partial denture, irrespective of the fitting member. This simplifies the occlusal adjustment, without the need to perform the occlusal adjustment on the outer crown at the laboratory stage as in the case of a conventional konus telescope partial denture. Therefore, occasions or chances of forming the occlusal surface increase, and the process is simplified, without the need of additionally considering the thickness of the top portion of the inner crown as in the conventional case. It is noted that the occlusal adjustment at a dental office still requires delicate adjustment as in the conventional case. In the present invention, however, such a fine adjustment is limited to the occlusal adjustment of the clasped tooth alone, which ensures that the occlusal adjustment is facilitated advantageously.

As described above, according to the present invention, the occlusal adjustment is primarily performed on the clasped tooth, the fitting member to be fitted to the clasped tooth is a cylindrical member through which the clasped tooth penetrates, and the partial denture has a relatively simple structure compared to a conventional konus telescope partial denture. For these reasons, the above-described partial denture mounting structure does not need a fitting member of a delicate shape, and does not require special intuition or expertise in dentistry. Even a relatively inexperienced dentist can provide a comfortable partial denture to a patient, without much difficulty.

Further, as the fitting member is cylindrical, at the time of wearing the partial denture, the air between the clasped tooth and the fitting member readily escapes, thereby facilitating the mounting of the partial denture. In the case of a conventional konus telescope partial denture, when the same was finished just in size, there was a problem that the air would not readily escape from between the clasped tooth and the outer crown (full veneer crown) corresponding to the fitting member of the present invention, especially when the taper angle of the inner crown was small. The fitting member of the present invention suffers no such a problem. Here, the height of the cylindrical member is not particularly limited.

The fitting member is made of a cast alloy.

The cylindrical member serving as the fitting member may be a cylindrical member having a height of not less than 4 mm, or may be a cylindrical member (ring member) having a height of less than 4 mm.

In the case of the ring-shaped fitting member ("ring member") with the height of less than 4 mm, the clasped tooth penetrates through the ring member, and the ring member is naturally fitted to the root portion of the clasped tooth. The top portion of the clasped tooth protrudes from and is exposed from the ring member. The top and top corner portions of the clasped tooth suffer no stress from the ring member; the stress is applied only to the lower portion of the side peripheral surface of the clasped tooth. This greatly reduces the moment around the root of the clasped tooth as compared with the structure where the top portion of the clasped tooth suffers the stress. Accordingly, the load on the clasped tooth is small, and high durability is maintained. Further, the uncomfortable feeling in the oral cavity is much smaller than in the case of the structure where the clasped tooth is fully covered with a covering (outer crown). The above-described functions of the ring member are similar to those of the cylindrical member with the height of not less than 4 mm, although some of the functions may be more prominent as the height is smaller.

The denture base may be configured to cover an outer surface of the fitting member as well as a portion of the side peripheral surface of the clasped tooth that extends above the portion to which the fitting member is fitted.

This reliably secures the ring member on the denture base. This can further cause the denture base to assist the function of the ring member.

The fitting member may have a protruding portion provided on an outer peripheral surface thereof, and the fitting member may be surrounded by and fixedly secured to the denture base.

Although the fitting member without the protruding portion can be firmly secured to the denture base, the protruding portion may be provided as a safety measure. The protruding portion exerts the anchor effect within the denture base, to more firmly secure the fitting member.

The clasped tooth may be formed using a remaining natural tooth or an artificial tooth supported by an implant (artificial tooth root), and the remaining tooth or the implant-supported artificial tooth may be provided with a clasped-tooth covering member that covers only a side peripheral surface of the tooth or an entire surface including a top portion thereof.

In this case, the remaining tooth or the artificial tooth supported by the artificial tooth root (implant) serving as the clasped tooth is provided with the clasped-tooth covering member which is selected from roughly two types as described above. Such a clasped-tooth covering member is relatively simple in shape, and the one of an ordinary level can be fabricated without much difficulty. The clasped-tooth covering member may be made of a metal, resin, ceramic, or a composite material thereof.

The occlusal surface is naturally formed on the top surface of the remaining tooth or the implant-supported artificial tooth. Particularly in the case where an implant-supported artificial tooth is to be used as the clasped tooth, it is possible to select an appropriate location on the upper or lower jaw to which the artificial tooth root is to be implanted, and a partial denture can be fabricated by using the implant-supported artificial tooth as the clasped tooth. Accordingly, it is possible to fabricate a partial denture on the basis of a single implant, eliminating the need of fabricating a full denture, for example. It is of course possible to use two or more implant-supported teeth as the clasped teeth. Further, in the case of using two or more clasped teeth, if it is difficult to fabricate a satisfactory partial denture with only the remaining teeth, at least one implant may be disposed at a desired location to provide a clasped tooth, and use it as the primary clasped tooth. Using the implant(s) can greatly increase the selection of clasped tooth/teeth when fabricating a partial denture.

Even if there is only one tooth remaining (with 13 teeth missing), the remaining tooth can be used as a clasped tooth, and a partial denture with 13 artificial teeth replacing the 13 missing teeth can be formed.

The remaining tooth used for forming the clasped tooth may be a non-vital tooth with no nerve. The clasped-tooth covering member may cover the entire surface including the top portion of the non-vital tooth or only the side peripheral surface thereof.

As such, in the case of a non-vital tooth, the clasped-tooth covering member covers the entire tooth including its top portion, or covers only its side peripheral surface. In either case, the clasped-tooth covering member adds a high strength to the non-vital tooth. The fitting member does not exert stress on the tooth top portion. Therefore, the function as the clasped tooth can be maintained for a sufficiently long time.

The above-described clasped-tooth covering member that covers only the side peripheral surface is often configured to cover the side peripheral surface at the portion lower than the protruded portion, i.e. at the root portion, of the remaining tooth.

Alternatively, the remaining tooth used for forming the clasped tooth may be a vital tooth with a nerve, and the clasped-tooth covering member may preferably cover only the side peripheral surface of the vital tooth.

According to this configuration, the vital tooth with a nerve, having only the side peripheral surface covered with the clasped-tooth covering member, penetrates through the cylindrical fitting member, with its top portion exposed from the fitting member. The clasped-tooth covering member functions as reinforcement by covering the side peripheral surface of the clasped tooth. As a result, the tooth can sufficiently exert the function as the clasped tooth, while its nerve remains, so that the tooth can be kept healthy for a longer time. Further, the uncomfortable feeling on the vital tooth can be reduced. The occlusal adjustment is merely required, which provides a great advantage.

In the case of the vital tooth as well, the clasped-tooth covering member that covers only the side peripheral surface as described above is often configured to cover the side peripheral surface at the portion lower than the protruded portion of the remaining tooth.

The clasped tooth may be formed by shaping an artificial tooth supported by an implant (artificial tooth root), which tooth has no covering thereon. The fitting member may be fitted onto the implant-supported artificial tooth.

According to this configuration, it is possible to fabricate a clasped tooth by using no clasped-tooth covering member.

The clasped tooth may be configured to have an upward taper with a taper angle of not less than 1° and not more than 8° on its outer surface at least from an upper portion to an intermediate portion thereof.

If the taper angle is less than 1°, it is often difficult to dismount the partial denture. If the taper angle is more than 8°, the retaining force decreases, making the partial denture easy to slip off. The taper angle of not less than 1° and not more than 3° is particularly preferable as it can achieve an appropriate balance between the easiness in dismounting and the retaining force. As a result, the fitting force can be applied to the root portion of the clasped tooth more reliably. It is noted that, naturally, the cylindrical fitting member also has its inner surface tapered to match the taper on the clasped tooth.

For providing a taper to the clasped tooth, the protruded portion of the remaining tooth or the artificial tooth may be slightly ground in advance so as to facilitate the fabrication of the taper at a laboratory. In the case of a telescope partial denture, a milling machine has been used for tapering the inner crown, Such a tapering machine may be used at a laboratory to form the taper with ease and with extremely high precision.

The taper angle at the root portion of the clasped tooth may be configured to be (1) the same as the taper angle at the upper portion, (2) smaller than the taper angle at the upper portion, or (3) zero (i.e. upright). In the case of (2) or (3) above, the taper angle may be made smaller or zero at the root portion of the clasped tooth within a height (width) range of about 1.5 mm to about 3 mm from the lower end of the cervical portion of the tooth.

In each case of (1), (2), and (3) above, no stress is applied from the fitting member to the top portion of the clasped tooth, which greatly reduces the load on the clasped tooth. Furthermore, in the case of (2) or (3) above, at the root portion of the clasped tooth, the taper angle is not maintained but decreased. That is, the upward taper is reduced, and the upright posture (vertical posture) becomes dominant. Such a change from the taper to the vertical posture at the root portion can make the force from the fitting member more reliably act on the root of the clasped tooth. As a result, the load on the clasped tooth is further reduced, and high durability can be maintained. At the same time, mounting the partial denture (or, fitting the fitting member) can prevent the movement of a loose tooth. The loose tooth is secured, and rather protected.

Preferably, the top portion of the clasped tooth exposed from the cylindrical member is subjected to occlusal adjustment.

As the top portion of the clasped tooth is exposed from the cylindrical fitting member, naturally, the occlusal surface is formed on the top portion of the clasped tooth. The occlusal adjustment can be conducted at an appropriate time (opportunity) during manufacture, independently of the fitting member. Therefore, unlike the case of a conventional telescope partial denture which requires occlusal adjustment on the outer crown, although the occlusal adjustment itself still requires delicate adjustment, it is only necessary to focus on the top portion of the clasped tooth particularly at a clinic, without the need of considering many other things. Furthermore, the manners and occasions of performing the occlusal adjustment process increase. More specifically, in the conventional konus telescope partial denture, it was necessary to perform final occlusal adjustment on the outer crown taking into consideration the total height of the patient's tooth, the inner crown (corresponding to the clasped-tooth covering member of the present invention), and the outer crown (corresponding to the cylindrical member as the fitting member of the present invention). In the present invention, as the fitting member is cylindrical, it is only necessary to perform the occlusal adjustment on the top surface of the clasped tooth alone.

In the clasped-tooth covering member of the clasped tooth and/or the cylindrical member constituting the fitting member, a ceramic or resin may be applied onto at least an exposed portion thereof,

The ceramic or resin is preferably in a whitish color similar to the color of the tooth or a pinkish color similar to the color of the gum. This can improve aesthetics by hiding metallic luster at the attention-grabbing portion(s).

There may be a single clasped tooth, and the fitting member may be fitted to the clasped tooth for mounting the partial denture.

Even if there is only one remaining tooth, the present invention can provide a partial denture that is excellent in wearing feeling and that can be mounted stably.

The present invention provides a partial denture which includes an artificial tooth, a denture base that holds the artificial tooth, and a fitting member fixedly secured to the denture base. In this partial denture, the fitting member is made of cast alloy and is a cylindrical member configured to cover only a side peripheral surface of a clasped tooth.

With this configuration, the clasped tooth penetrates through the cylindrical member as the fitting member in the partial denture, and the top portion of the clasped tooth is exposed from the cylindrical member. Stress from the cylindrical member is applied not to the top portion but to the side peripheral surface of the clasped tooth. Large moment would not be generated around the root of the clasped tooth, and accordingly, the clasped tooth suffers only a small load and can maintain durability.

The fitting member to be fitted to the clasped tooth has a relatively simple structure; it is a cylindrical member through which the clasped tooth penetrates. Therefore, it is unnecessary to form a fitting portion of a delicate shape for the above partial denture, The partial denture can be fabricated without the need of special intuition or expertise in dentistry. Even a relatively inexperienced dentist can fabricate the partial denture without much difficulty.

Further, as the fitting member is cylindrical, the uncomfortable feelings in the oral cavity or on the teeth can be alleviated. Still further, at the time of wearing the partial denture, the air will readily escape from between the clasped tooth and the fitting member, which can facilitate the mounting of the partial denture.

As previously described in conjunction with the partial denture mounting structure, in the partial denture, the cylindrical member as the fitting member may be a cylindrical member having a height of not less than 4 mm or a cylindrical member (ring member) having a height of less than 4 mm.

In the case of the ring member of a small height, when the clasped tooth penetrates therethrough, the ring member is naturally fitted to the root portion of the clasped tooth. Therefore, as compared with the structure in which stress is applied to the top portion of the clasped tooth, the moment around the root of the clasped tooth is largely decreased, and the uncomfortable feeling in the oral cavity is also reduced greatly.

As previously described, in the partial denture, the denture base may cover an outer surface of the fitting member, and the denture base may be configured to also cover a portion of the side peripheral surface of the clasped tooth that extends above the portion to which the fitting member is fitted.

This reliably secures the ring member on the denture base. This can further cause the denture base to assist the function of the ring member.

Further, as previously described, in the partial denture, the cylindrical member serving as the fitting member may have a protruding portion provided on an outer peripheral surface thereof, and the fitting member may be fixedly secured to the denture base with the protruding portion embedded in the denture base.

Although the cylindrical member without the protruding portion can be firmly secured to the denture base, the protruding portion exerts the anchor effect within the denture base, to more firmly secure the fitting member.

Further, in the partial denture according to a reference embodiment, the cylindrical fitting member may have an inner peripheral surface composed of a one-part upwardly tapered surface or a two-part upwardly tapered surface having an upper tapered section and a lower tapered section that is more upright than the upper tapered section.

This enables the taper provided on the inner surface of the cylindrical fitting member to match the taper provided on the outer surface of the clasped-tooth covering member.

Further, as previously described, in the partial denture, the cylindrical member constituting the fitting member may have an outer surface with a ceramic or resin applied thereon.

In this case, using a white ceramic or resin can improve the aesthetics.

### EFFECTS OF THE INVENTION

According to the present invention, it is possible to provide a partial denture mounting structure and the partial denture that are highly durable and can reduce the load on a clasped tooth, that can clarify the entire fabrication process including occlusal adjustment, and that do not require special intuition or high-level proficiency in dentistry at a dental office.

### BRIEF DESCRIPTION OF THE DRAWINGS

Fig. 1 is a perspective view of a partial denture mounting structure according to a reference embodiment, the structure being set on a plaster model;
Figs. 2A and 2B are cross-sectional views taken along the line II-II in Fig. 1;
Fig. 3 is a perspective view of the partial denture in the partial denture mounting structure shown in Fig. 1;
Figs. 4A and 4B are perspective views of the partial denture in Fig. 3 as seen from the back side;
Fig. 5A is a perspective view of an ordinary cylindrical member with no protruding portion;
Fig. 5B is a perspective view of a cylindrical member provided with a protruding portion;
Fig. 6 shows a plaster model mounted with the clasped teeth in the partial denture mounting structure shown in Fig. 1;
Fig. 7 is a flowchart illustrating a process of fabricating a partial denture mounting structure according to the first embodiment;
Fig. 8 is a flowchart illustrating another fabricating process, different from that in Fig. 7, which can shorten and simplify the process steps;
Fig. 9 is a cross-sectional view of a partial denture mounting structure, as a reference example, according to a first modification of the first reference embodiment;
Fig. 10 is a cross-sectional view of a partial denture mounting structure, as a reference example, according to a second modification of the first reference embodiment;
Fig. 11 is a perspective view of a partial denture mounting structure according to a second reference embodiment, the structure being set on a plaster model;
Fig. 12 is a cross-sectional view taken along the line XII-XII in Fig. 11;
Fig. 13 is a cross-sectional view of a partial denture mounting structure, as a reference example, according to a first modification of the second reference embodiment;
Fig. 14 is a cross-sectional view of a partial denture mounting structure, as a reference example according to a second modification of the second reference embodiment;
Fig. 15 is a cross-sectional view of a partial denture mounting structure according to a third reference embodiment;
Fig. 16 is a cross-sectional view of a modification of the partial denture mounting structure shown in Fig. 15;
Fig. 17 is a perspective view of a partial denture mounting structure according to a fourth reference embodiment, the structure being set on a plaster model;
Fig. 18 shows a plaster model mounted with the clasped tooth in the partial denture mounting structure shown in Fig. 17;
Fig. 19 is a cross-sectional view taken along the line XIX-XIX in Fig. 17;
Fig. 20 is a perspective view of a partial denture mounting structure according to a first embodiment of the present invention, the structure being set on a plaster model;
Fig. 21 is a cross-sectional view taken along the line XXI-XXI in Fig. 20;
Fig. 22 is a perspective view of the partial denture shown in Fig. 20 as seen from the front side;
Fig. 23 is a perspective view of the partial denture shown in Fig. 22 as seen from the back side;
Fig. 24A shows a ring member serving as a fitting member provided with no protruding portion;
Fig. 24B shows a ring member as a fitting member provided with protruding portions on its outer peripheral surface;
Fig. 25 shows a plaster model mounted with the clasped teeth in the partial denture mounting structure shown in Fig. 20;
Fig. 26A is a cross-sectional view of a partial denture mounting structure, as an example of the present invention, according to a first modification of the first embodiment;
Fig. 26B shows exemplary dimensions and angles of the partial denture mounting structure shown in Fig. 26A; and
Fig. 27 is a cross-sectional view of a partial denture mounting structure, as an example of the present invention, according to a second modification of the first embodiment.

### DESCRIPTION OF THE PREFERRED EMBODIMENTS

### <First Reference Embodiment>

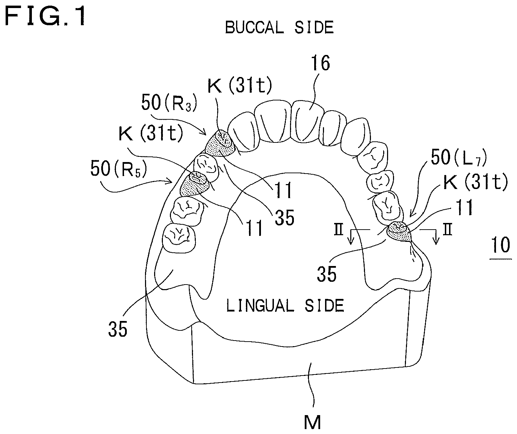

Fig. 1 is a perspective view of a partial denture mounting structure 50 according to a first reference embodiment. In Fig. 1, a plaster model M represents a patient's upper jaw on which a partial denture 10 is mounted. The mounting structure 50 is formed as the partial denture 10 is mounted on teeth in the oral cavity of the plaster model M. More specifically, three clasped teeth K are prepared in this example, which teeth K penetrate through corresponding fitting members 11 to implement the mounting structure 50. The clasped teeth K correspond to the patient's seventh tooth on the left side (L₇), third tooth on the right side (R₃), and fifth tooth on the right side (R₅). These three teeth K are each covered with a clasped-tooth covering member 31, which will be described below. While the clasped-tooth covering member 31 may be made of any material, a metallic covering 31 is often used, as it is easy to manufacture and offers high durability. In the present embodiment, a clasped tooth K is always provided with a clasped-tooth covering member 31 (covering the entirety of the tooth including its top, or covering the side peripheral surface alone). Therefore, a clasped tooth K and its covering member 31 as a combination may be referred to as a clasped tooth K(31). Further, the "clasped-tooth covering member" may also be called a "metallic covering" or a "covering". In the example shown in Fig. 1, the partial denture 10 is safely held in place with the three clasped teeth K(31) as the major fixed locations.

The partial denture 10 has cylindrical fitting members 11, and each clasped tooth K(31) penetrates through the corresponding cylindrical member 11, with a top portion 31t of the tooth exposed. It is noted that the fitting member and the cylindrical member are denoted by the same reference numeral. As the clasped teeth K enter into and penetrate through the cylindrical members 11, the partial denture 10 is fitted to the clasped teeth K.

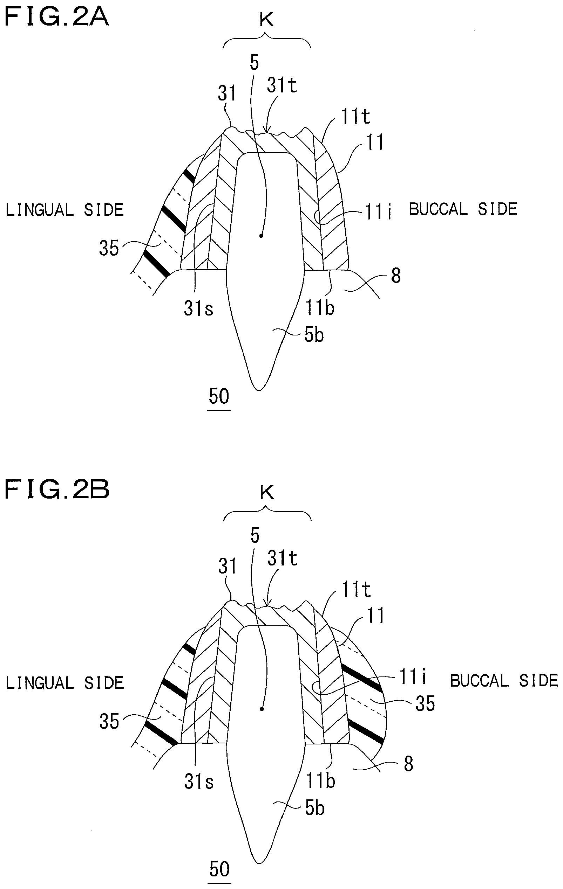

Figs. 2A and 2B each show a cross-sectional view of the left seventh (L₇) clasped tooth K(31) shown in Fig. 1. In Fig. 2A, a denture base 35 is not provided on the buccal side. In Fig. 2B, the denture base 35 is provided on the buccal side as well, so that the clasped-tooth covering member 31 is more firmly secured to the denture base 35. The denture base 35 has its back surface coming into close contact with the mucosa of the residual ridge 8. The bottom end 11b of the fitting member 11 is in flush with the back surface of the denture base 35. The patient's left seventh tooth 5 has a root 5b, but it is a non-vital tooth with no nerve. Further, the tooth 5 is entirely covered with a metallic covering 31 from its top. On the top portion 31t of the metallic covering 31, an occlusal surface is formed. The side peripheral surface of the covering 31 has a tapered surface 31s that tapers upward from the root, to thereby form a smooth conical surface with metallic luster. The side peripheral surface is configured to have a (taper) angle of not less than 1° and not more than 8° with respect to the vertical direction. If the taper angle is less than 1°, it will often be difficult to dismount the partial denture. If the taper angle exceeds 8°, the retaining force will decrease, causing the partial denture to easily slip off. In particular, the taper angle of not less than 1° and not more than 3° can achieve an appropriate balance between the easiness in dismounting and the retaining force.

It is noted that the fitting member 11 may be attached to the denture base 35 in any manner; for example, it may be fixedly secured to the denture base 35 in a well-known manner.

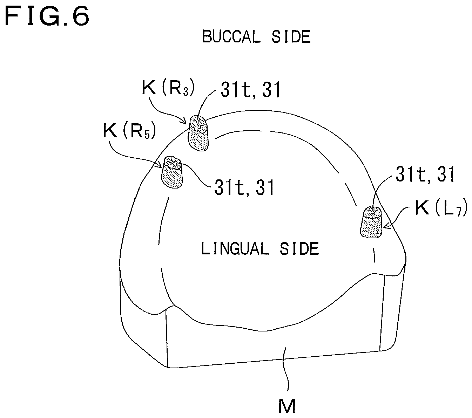

In forming a metallic covering 31, a tooth 5 is shaped using a dental cutting machine or the like, taking into consideration the balance inside the oral cavity, including the shape and size of the mounting structure 50 provided with the cylindrical fitting member 11. In Figs. 2A and 2B, the tooth 5 has a regular shape corresponding to the covering 31. In practice, however, the tooth 5 may be deformed, or it may have a borehole as a result of treatment of cavity, as long as the tooth root 5b remains. The irregular shape of the tooth is absorbed by the inner surface of the metallic covering 31. Even in the case of such a deformed tooth 5, the external surface covered with the metallic covering 31 has an artificial conical side surface with metallic luster, excluding the top portion 31t. Therefore, it may be defined that the clasped tooth K(31) is substantially an "artificial truncated cone with a top portion provided with irregularities (sometimes referred to as petals) as a result of occlusal adjustment" (see Fig. 6).

Naturally, the inner surface 11i of the fitting member 11 is tapered to match the tapered surface 31s of the clasped tooth K(31).

A cast alloy is the material for the clasped-tooth covering member 31 for its manufacturability and durability as described above. While any of ordinary dental cast alloys such as gold-platinum alloy, gold-silver-palladium alloy, and other alloys may be used, gold-platinum alloy is most preferable among them.

The clasped tooth K covered with the metallic covering 31 penetrates through the cylindrical fitting member 11 so as to be fitted thereto. Needless to say, the fitting member 11 is located at the partial denture 10. The cylindrical member 11 is in contact with the side peripheral surface of the metallic covering 31 so as to surround the clasped tooth K(31). One feature of the cylindrical member 11 is that it is as high as, or slightly lower than, the top portion 31t of the metallic covering 31. This is for the purpose of making the top portion 31t of the metallic covering 31 serve as the occlusal surface. As a result, in the partial denture 10, the top portion 11t of the fitting member 11 is substantially at the same level as, or lower than, the top portion (occlusal surface) of the artificial tooth 16. A cast alloy is also the material for the cylindrical member 11 as the fitting member, for its manufacturability and durability. While any of ordinary dental cast alloys such as gold-platinum alloy, gold-silver-palladium alloy, and other alloys may be used, gold-platinum alloy is most preferable among them.

In Figs. 2A and 2B, the cylindrical member 11 serving as the fitting member is illustrated to have the bottom portion 11b in contact with the mucosa of the residual ridge 8. The cylindrical member 11 may have such a structure that its end portion forms a plane to provide a surface contact. Alternatively, the bottom portion 11b of the cylindrical member 11 may be apart from (or, floating on) the mucosa of the residual ridge 8 by 0.5 mm, for example. Still alternatively, the bottom end of the cylindrical member 11 may be tapered such that the outer surface approaches the inner surface to thereby form a single edge. As such, the bottom portion 11b of the cylindrical member 11 may be in a line shape rather than the end face. Furthermore, the tapered surface provided on the outer surface of the cylindrical member 11 may be planer or convex.

For the denture base 35 on the buccal side shown in Fig. 2B as well, the bottom portion may be in contact with the mucosa of the residual ridge 8, or it may be apart from the mucosa of the residual ridge 8 by 0.5 mm, for example. Further, it may be tapered, as in the case of the cylindrical member 11.

The above descriptions of the bottom portion 11b of the cylindrical member 11 and the denture base 35 on the buccal side will apply to each mounting structure 50 which will be described below.

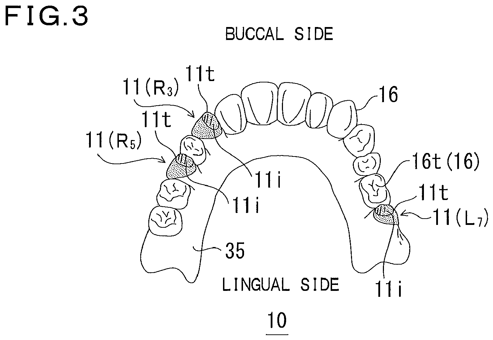

Fig. 3 is a perspective view of the partial denture 10 that is mounted on the teeth on the plaster model in Fig. 1. As described above in conjunction with Fig. 1, cylindrical fitting members 11 are arranged at the positions L₇, R₃, and R₅ corresponding to the clasped teeth. As seen in Fig. 3, the top portion 11t of the cylindrical fitting member 11 is substantially at the same level as, or lower than, the top portions of the artificial teeth 16 that are arranged side by side. This is for the purposes of causing each clasped tooth K(31) to penetrate through the corresponding cylindrical fitting member 11 and thus making the top surface 31t of the clasped tooth K(31) serve as the occlusal surface, as described previously.

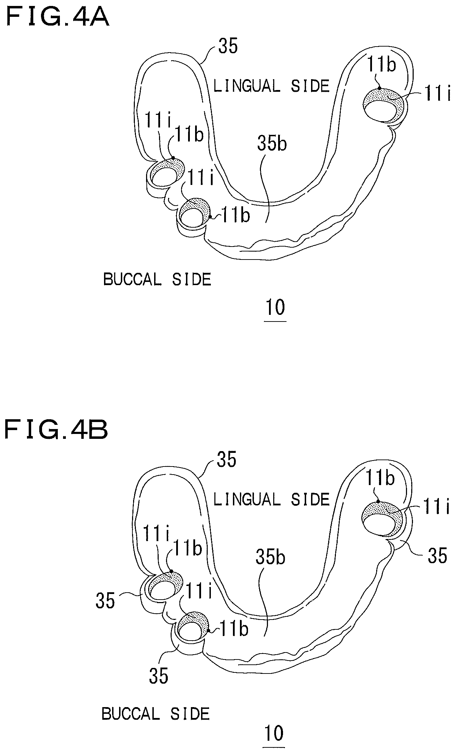

Figs. 4A and 4B are perspective views of the partial denture 10 in Fig. 3 as seen from the back side. In Fig. 4A, the denture base 35 is not provided on the buccal side. In Fig. 4B, the denture base 35 is provided on the buccal side as well, for more firmly securing the fitting members 11 to the denture base 35. As no artificial teeth are provided on the back side, the bottom end 11b and the inner surface 11i of each cylindrical fitting member 11 are visible clearly. The bottom end 11b is in flush with the back surface 35b of the denture base 35. As the cylindrical fitting member 11 extends to reach the back surface 35b of the denture base 35, the force from the fitting member 11 can reliably be applied to the root portion of the clasped tooth K(31).

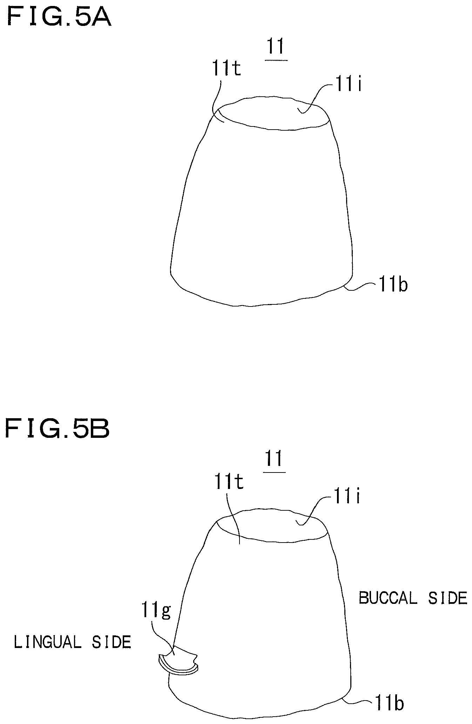

Figs. 5A and 5B are perspective views of the cylindrical members 11. In Fig. 5A, there is no protruding portion provided on an outer surface. In Fig. 5B, a protruding portion 11g is provided on the outer surface, on the lingual side at the root portion. When a posterior tooth is to be used as the clasped tooth, the protruding portion 11g may be provided on the buccal side. Even if no protruding portion is provided, as in Fig. 5A, the cylindrical member 11 can be fixedly secured to the denture base with no problem. However, the protruding portion 11g provides the anchor effect as the same is embedded in the denture base 35, enabling the cylindrical member 11 to be more firmly secured to the denture base 35.

With the fitting member 11 formed as a cylindrical member, the moment around the root 5b of the tooth 5 can be reduced compared to the case of a conventional konus telescope partial denture where the force would be applied to the entirety including the top portion of the clasped tooth K(31). As a result, the load on the tooth 5 serving as the clasped tooth K(31) and its root 5b can greatly be reduced, leading to improved durability. Furthermore, as the fitting member is cylindrical and also tapered upward, the stress is applied to the lower part of the clasped tooth. This can also reduce the load on the tooth root portion, and the uncomfortable feeling in the tooth is greatly reduced. Moreover, as the fitting member is cylindrical, the air between the fitting member and the clasped tooth will cause no obstruction at the time of wearing the partial denture.

In contrast, in a conventional konus telescope partial denture, the fitting member was an outer crown that completely covered the clasped tooth. This would apply large force to the top portion of the clasped tooth, possibly causing breakage of the root. Moreover, the air would not readily escape from between the outer crown and the clasped tooth at the time of wearing the denture.

Fig. 6 shows the clasped teeth K(31), set on the plaster model M. In each clasped tooth K(31), a remaining tooth 5 is located with its root 5b. The clasped tooth K(31) is covered with a metallic covering 31, as described above. The top portion 31t of the metallic covering 31 is subjected to occlusal adjustment so as to provide an occlusal surface. The top portion 31t of the metallic covering 31 penetrates through the cylindrical fitting member 11 of the partial denture 10, shown in Fig. 3, to protrude from the top portion 11t of the cylindrical fitting member 11, and serves as the occlusal surface. The clasped tooth K is covered with the metallic covering 31, which can reinforce the underlying tooth 5, thereby enabling a high strength to be maintained as a whole. Therefore, in combination with the feature that each fitting member 11 is cylindrical, it is possible to firmly and stably hold the partial denture with a small number of teeth. As the load on the root portion of each clasped tooth is greatly reduced, as described above, the clasped tooth itself is also protected.

The metallic covering 31 of the clasped tooth K and the cylindrical fitting member 11 are both geometric and do not require delicate shape adjustment, except the occlusal surface 31t. Furthermore, the occlusion can be adjusted at the time of fabrication of the metallic covering 31, irrespective of the cylindrical fitting member 11, as will be described later. Accordingly, the partial denture 10 can be fabricated relatively easily, without the need of special sense or expertise in dentistry. Particularly, after the metallic covering 31 is attached, it is only necessary to focus on the clasped tooth K, because the occlusal relation between the upper and lower teeth has already been determined. This facilitates occlusion taking at a dental office.

In the case where a non-vital tooth is to be used as a clasped tooth, the non-vital tooth may be entirely covered with the metallic covering from the top, as shown in Fig. 6, or alternatively, only the side peripheral surface of the non-vital tooth may be covered with the metallic covering.

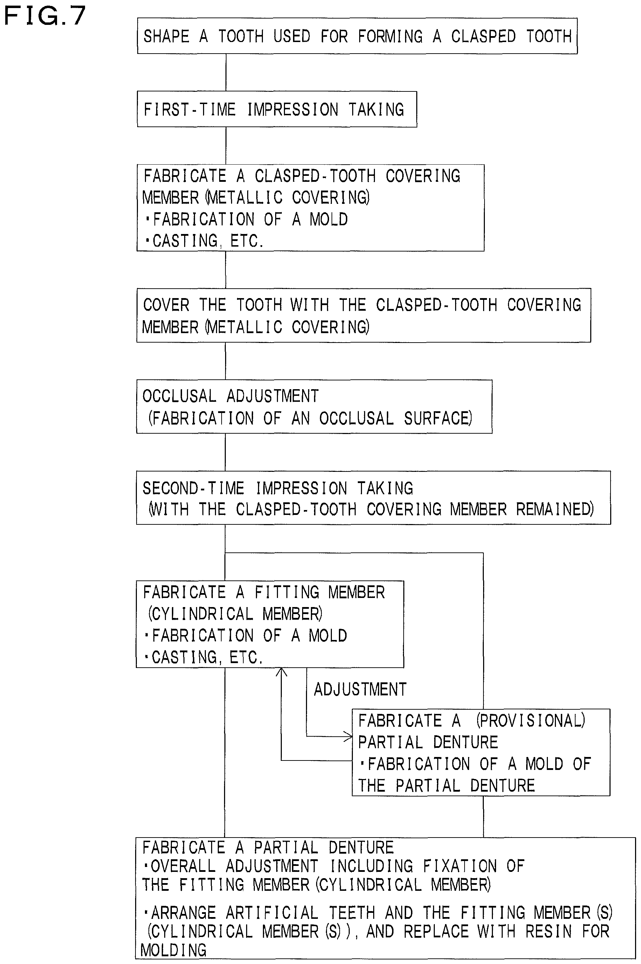

Fig. 7 is a flowchart illustrating a method for fabricating a partial denture 10 and its mounting structure 50 according to the present embodiment. Firstly, in the oral cavity of a patient, a tooth 5 is shaped to form a clasped tooth K(31). A dental cutting machine or the like is used to form the tooth into a shape that, when covered with a metallic covering 31, is substantially the same in height as the patient's remaining, healthy tooth/teeth. Impression taking is then carried out to take the impression of the tooth 5, and a mold is produced. The mold for the metallic covering 31 is preferably formed using a machine for tapering an inner crown, such that a high-precision tapered surface is formed on the outer surface. The resultant mold is used to produce a metallic covering 31. As the metal, a gold-platinum alloy, for example, is used preferably. The side surface and the top portion are preferably made to have thicknesses similar to those of a conventional crown. Further, the outer surface is tapered with a taper angle of not less than 1° and not more than 8°, as described above.

The metallic covering 31 fabricated by casting is then formed, using a dental cutting machine or the like, into a shape capable of covering the tooth 5, and is fixedly secured to the tooth 5 using a cement or other bonding agent. Then, a top portion 31t of the fixedly secured metallic covering 31 is subjected to occlusal adjustment to form an occlusal surface, for example. The occlusal surface can be formed on the top of the clasped tooth later at an appropriate timing (opportunity). Thus, at this stage, it is only necessary to perform adjustment for determining the height and diameter of occlusion. If it is possible to fabricate the partial denture all at once on site, however, the occlusal surface is preferably formed at this stage. This stage corresponds to the state shown on the plaster model in Fig. 6.

Thereafter, impression taking is carried out for the second time. This impression taking enables fabrication of a cylindrical member 11 as the fitting member. Further, it enables fabrication of a provisional partial denture used for adjusting the arrangement of the cylindrical member(s) 11 and artificial teeth 16. Furthermore, it enables fabrication of a mold for the entire partial denture 10.

The side surface of the cylindrical member 11 is preferably made to have a thickness within the range of the thickness of a conventional crown. Naturally, according to a reference embodiment, the inner surface of the cylindrical member 11 is tapered so as to match the taper on the outer surface of the metallic covering 31 of the clasped tooth K. The height of the cylindrical member 11 is preferably the same as, or slightly lower than, the top portion of the neighboring artificial tooth or remaining tooth, so as to secure occlusion at the top portion 31t of the clasped tooth K. The bottom end 11b of the cylindrical member 11 is aligned with the back surface 35b of the denture base, such that the stress is applied to the root portion of the clasped tooth and that the moment around the tooth root 5b is reduced.

Thereafter, the cylindrical member(s) 11 and the artificial teeth 16 are arranged in the mold, which is then replaced with a resin to be a denture base, whereby the partial denture 10 is fabricated.

The method for fabricating the partial denture mounting structure shown in Fig. 7 may be used whether the clasped tooth is a posterior tooth or an anterior tooth. Now, another fabrication method will be described which ensures remarkable reduction in time and simplification of the processing. In this fabrication method, when the clasped tooth is an anterior tooth, it is not possible to cover both the buccal side and lingual side of the cylindrical member 11 with the denture base 35, and therefore, a protruding portion is preferably provided on the lingual side to more firmly secure the cylindrical member 11 to the denture base 35 on the lingual side. When the clasped tooth is a posterior tooth, this fabrication method can be used favorably with no problem.

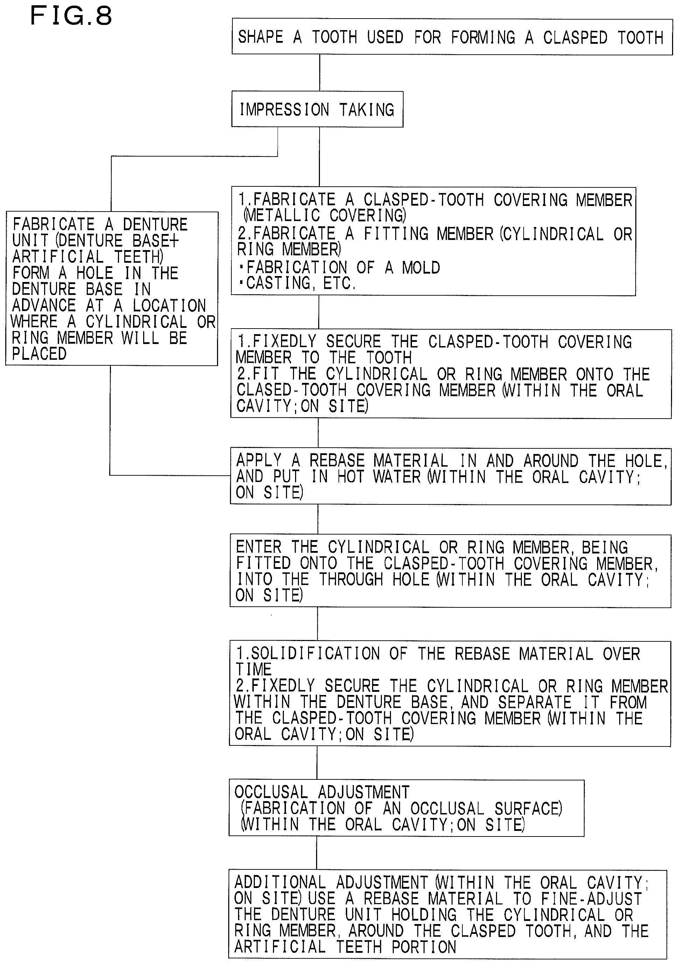

Fig. 8 is a flowchart illustrating the other method for fabricating the partial denture 10 and its mounting structure 50 according to the present embodiment. Firstly, a tooth 5 is shaped to form a clasped tooth K(31) in the patient's oral cavity. Impression taking is then carried out to take the impression of the tooth 5, and a mold is produced. The mold for the metallic covering 31 is preferably formed using a milling machine, i.e. a machine for tapering the inner crown, so as to form a high-precision tapered surface on the outer surface. The resultant mold is used to fabricate both a metallic covering 31 and a cylindrical (or a ring) member 11. Both of the metallic covering 31 and the cylindrical or ring member 11 are preferably made of a metal such as gold-platinum alloy, and they are preferably made to have the side surfaces and top portions having the thicknesses similar to those of a conventional crown. Further, as described previously, the outer surface of the metallic covering 31 is tapered with a taper angle of not less than 1° and not more than 8°, and the inner surface 11i of the cylindrical or ring member 11 is tapered in correspondence therewith.

The metallic covering 31 fabricated by casting is then formed, using a dental cutting machine or the like, into a shape capable of covering the tooth 5, and is fixedly secured to the tooth 5 using a cement or other bonding agent. The cylindrical member 11 is then fitted onto the metallic covering 31. At this point in time, the metallic covering 31 has been fixed to the tooth so as to constitute a clasped tooth K, and the cylindrical member 11 is fitted onto the clasped tooth K.

On the other hand, on the basis of the impression taken, a denture unit is fabricated which includes a denture base 35 and artificial teeth 16 fixedly secured to the denture base 35. That is, the fitting member, or, the cylindrical member 11 has not been attached to the denture base 35. The cylindrical member 11 is fitted on the clasped tooth K inside the oral cavity of the patient. In the denture unit, the denture base 35 extends at a location where the fitting member (cylindrical or ring member) 11 is to be attached.

At the location in the denture base 35 where the cylindrical member 11 is to be attached, a hole is bored at a laboratory. This hole is provided in the course of fabricating a wax pattern (wax model denture). At a dental office, the denture unit provided with such a hole is used to fabricate a partial denture, to match the conditions of the patient's oral cavity.

More specifically, at a dental office, a rebase material such as a cold curing resin is applied to the hole location, and then, the portion of the denture base including the location where the rebase material has been applied is put in hot water of about 85°C. It is on the premise that the denture base 35 has been made of a heat curing resin. As the rebase material is put in hot water of about 85°C, it softens with an appropriate viscosity, and a film with favorable operability is formed on the surface. Therefore, in practice at a dental office, it becomes easy to increase the gum by rebase processing and also easy to adjust the thickness of the gum. In addition, as the rebase material put in hot water and thus softened has a certain viscosity, the cylindrical member 11, for example, can readily be entered into the denture base around the hole through the intermediary of the rebase material. Further, excess or unnecessary part or stray part of the rebase material can be removed easily before it solidifies completely. In other words, as the rebase material softens and attains an appropriate viscosity as it is put in hot water, and as a film is formed on the surface, it does not flow like a fluid; rather, it can be handled as a single substance. A cold curing resin or a self-curing resin undergoes solidification and its strength rapidly increases over time. With such a rapid increase in strength, the cylindrical member 11, for example, can be firmly fixed in the state embedded in the denture base 35. In the case where the protruding portion 11g as shown in Fig. 5B has been provided on the cylindrical member 11, the protruding portion 11g functions as an anchor within the denture base 35, to thereby contribute to firm embedment.

After solidification of the rebase material, when the denture base 35 is separated from the clasped tooth K, the cylindrical member 11 is disengaged from the clasped tooth K(31) and follows the denture base 35, as the cylindrical member 11 is now embedded in and secured to the denture base 35. Thereafter, occlusal adjustment can be performed on the metallic covering 31 of the clasped tooth K, irrespective of the cylindrical member 11. In this manner, fabrication of the partial denture 10 and the partial denture mounting structure 50 is completed.

The above-described fabrication method is a special one of a plurality of fabrication methods. The partial denture and its mounting structure of the present invention do not necessarily have to be fabricated using the special fabrication method. The above method has been illustrated as one of the methods that can greatly shorten and simplify the process steps.

The above-described method for fabricating the partial denture 10 and its mounting structure 50 is greatly simplified and reduced in time, and easy to understand. Once the impression has been taken, the partial denture 10 and its mounting structure 50 can be fabricated with adjustment of only one time, without the need for the patient to visit the dental office a number of times for repeated adjustments. Moreover, as the adjustment is carried out on site within the oral cavity, it can be done with accuracy, resulting in the products having few displacements.

As the remarkable reduction in time and simplification of the fabrication process are very important points, the fabrication method will now be summarized again. Firstly, on the basis of the impression taken from the patient's oral cavity, a denture base with artificial teeth (i.e. a denture unit) is fabricated. A clasped-tooth covering member 31 and a cylindrical member 11 are also fabricated, and a denture base is fabricated on the model on which the clasped-tooth covering member 31 and the cylindrical member 11 have been mounted. Thereafter, a partial denture mounting structure is finished immediately on site, with only a single adjustment as follows. At a dental office, the clasped-tooth covering member 31 is firstly secured to the base body of the clasped tooth (i.e. a remaining tooth or an artificial tooth supported by an implant) within the patient's oral cavity (on site). Next, the cylindrical member 11 as the fitting member is fitted onto the clasped-tooth covering member 31. In the denture base 35 made of a heat curing resin, a hole is bored at a location corresponding to the clasped tooth K, in a size slightly greater than the tooth, and a rebase material is applied to and around the hole. The portion of the denture base 35 including the hole portion to which the rebase material has been applied is put in hot water of a temperature of not lower than 75°C, for example about 85°C. This allows the rebase material to attain an easy-to-handle state as previously described. Then, the clasped tooth K together with the cylindrical member 11 fitted thereon is aligned with the hole and pushed into the denture base 35, so that the clasped tooth K penetrates through the hole and the cylindrical member 11 is embedded into the denture base. This state is kept for a prescribed time. After a lapse of several minutes, the rebase material solidifies and its strength rapidly increases. As a result, the cylindrical member 11 embedded in the denture base 35 is firmly fixed to the denture base 35. When the denture base 35 is separated from the clasped tooth K, the cylindrical member 11 secured to the denture base 35 is pulled off from the clasped tooth K. When the cylindrical member 11 is provided with a protruding portion 11g as shown in Fig. 5B, the protruding portion 11g exerts the anchor effect to implement more secure embedment. In this manner, the partial denture 10 is almost finished, with the cylindrical member 11 as the fitting member firmly embedded and secured. Lastly, the partial denture 10 is entirely subjected to rebase processing (using a relatively soft rebase material, which is put in hot water) for final adjustment.

According to the above-described fabrication processing, once the denture base 35 with artificial teeth 16, the clasped-tooth covering member 31, and the cylindrical member 11 have been formed by impression taking, the partial denture 10 and its mounting structure 50 are completed on site at a dental office. This remarkably shortens and simplifies the fabrication of the partial denture and its mounting structure, and therefore can greatly reduce the burden on the patient as well as on the dental office and laboratory.

The partial denture and its mounting structure described above have the following features <F1> to <F5>.

<F1>: The load on the clasped tooth K can be reduced. As the fitting member 11 to be fitted onto the clasped tooth K is a cylindrical member, there is no stress applied to the top portion of the clasped tooth K, and therefore, the moment around the root 5b is reduced. Accordingly, it is possible to improve the durability of the clasped tooth as well as the tooth using which the clasped tooth has been formed.

<F2>: They can be fabricated without the need of special intuition or expertise in dentistry; even a relatively inexperienced dentist can fabricate them. This is for the following reasons (i) and (ii):
(i) Occlusal adjustment can be carried out independently of the fitting member. In a conventional telescope partial denture, an outer crown that completely covers the inner crown including its top was used as the fitting member, and the occlusal surface for mastication was formed on the outer crown (fitting member). Therefore, it was necessary to fabricate the inner and outer crowns in consideration of the occlusal adjustment. That is, in the conventional telescope partial denture, final occlusal adjustment had to be conducted on the outer crown taking into consideration the total height of the patient's tooth, inner crown, and outer crown. Fabrication of such a conventional telescope partial denture required a high level of skill. In contrast, according to the present invention, the fitting member is cylindrical, and thus, the occlusal adjustment may be carried out focusing only on the top surface of the clasped tooth K, i.e. only on the occlusal surface within the limited, small range. As the occlusal adjustment can be conducted irrespective of the fitting member, the entire fabrication process including the occlusal adjustment is clear and easy to understand, although the occlusal adjustment itself still requires delicate adjustment.
(ii) The covering that covers the clasped tooth is approximately in a truncated cone shape, as shown in Fig. 6, and has an outer surface of a geometric conical surface with a small taper angle. Correspondingly, the fitting member 11 has an inner surface of a geometric conical surface with a small taper angle. This eliminates the need of fine adjustment of shape as in the case of the conventional C-shaped clasp.

There is a machine conventionally used for tapering the inner crown. The same machine may be used at a laboratory to form a high-precision tapered surface on the metallic covering 31 of the clasped tooth K or on the outer surface of the implant-supported artificial tooth 21.

For the above reasons (i) and (ii), even a relatively inexperienced dentist can readily fabricate the partial denture and its mounting structure.

<F3>: The partial denture ensures high durability. There is no part like a conventional clasp where large stress is focused on a narrow metal. Therefore, the durability of the partial denture can be improved.

<F4>: The method for fabricating the partial denture 10 and its mounting structure 50 can be greatly reduced in time and simplified, as shown in Fig. 8, particularly in the case where a posterior tooth is used as the clasped tooth. The method is applicable even when an anterior tooth is used as the clasped tooth. This fabrication method greatly reduces the burden on the patient, the dental office, and the laboratory. The reduction in time and simplification of the fabrication method are based on the following technical features (i) and (ii):
(i) The fitting member is a cylindrical member 11.
(ii) The denture base 35 is formed of a heat curing resin, and a self-curing resin or a cold curing resin is used for the rebase material. A considerably soft viscosity is obtained in a unique manner, i.e. by putting the rebase material in hot water.

<F5>: Others
The uncomfortable feelings on the teeth or inside the oral cavity when wearing the partial denture are reduced, and the mounting of the partial denture is more facilitated. With a conventional telescope partial denture, there was a case where the air would not readily escape from between the clasped tooth and the fitting member when wearing the denture.

### <First Modification of First Reference Embodiment>

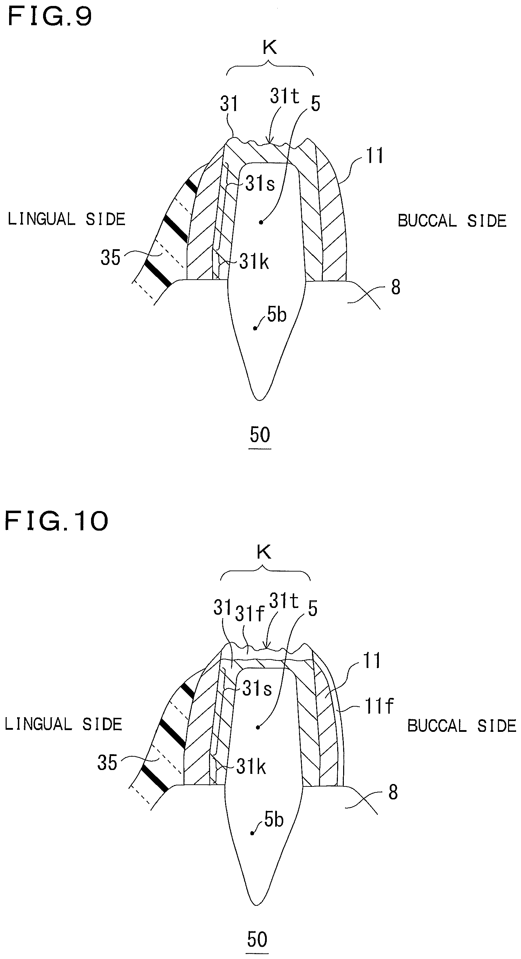

Fig. 9 is a cross-sectional view of a partial denture mounting structure 50, as an example of the present invention, according to a first modification of the first embodiment. Referring to Fig. 9, the metallic covering 31 has a tapered surface 31s at an upper portion, which surface has a taper angle of not less than 1° and not more than 8° as described above. This taper angle, however, is not maintained at a lower portion. The metallic covering 31 has a tapered surface 31k at the lower portion, in which the taper angle is made smaller than in the upper portion or made zero, or, upright. Providing such a bottom-part tapered surface 31k having a smaller taper angle or an upright shape, instead of extending the upper-part tapered surface 31s downward, ensures that the stress is focused on the root portion of the clasped tooth K(31) more reliably. As a result, it is possible to further reduce the load on the clasped tooth K(31) or on the underlying tooth 5.

### <Second Modification of First Reference Embodiment>

Fig. 10 is a cross-sectional view of a partial denture mounting structure 50, as an example of the present invention, according to a second modification of the first reference embodiment. Referring to Fig. 10, white coverings 31f and 11f are applied onto the top portion 31t of the metallic covering 31 and the buccal side of the fitting member 11, respectively. The coverings 31f and 11fare preferably made of white resin or ceramic. With the white coverings 11f and 31f, the top portion 31t of the metallic covering 31 and the fitting member 11 are both improved in aesthetics as the white color stands out.

### <Second Reference Embodiment>

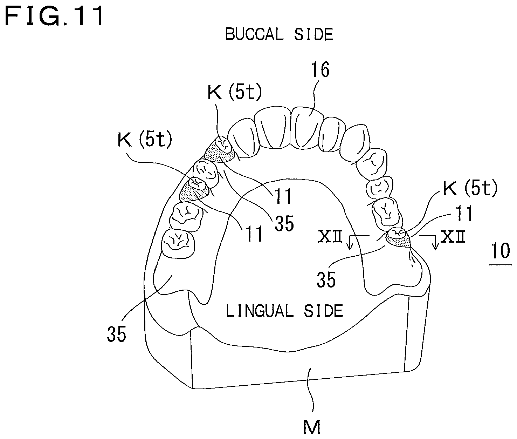

Fig. 11 is a perspective view of a partial denture mounting structure 50 according to a second reference embodiment. In the first reference embodiment, a clasped tooth K was formed by entirely covering a remaining tooth 5, including its top surface, with the metallic covering 31. By comparison, in the present embodiment, the top surface of the clasped tooth K comprises a top portion 5t of the remaining tooth 5 that is exposed from the cylindrical fitting member. Therefore, in the partial denture mounting structure 50 shown in Fig. 11, the top portion 5t of the clasped tooth is uncovered with metal.

In Fig. 11, the top end face of the cylindrical member as the fitting member 11 is thin in thickness, and it is drawn in a line. The top portion of the cylindrical member, however, may be in a band shape having a certain thickness.

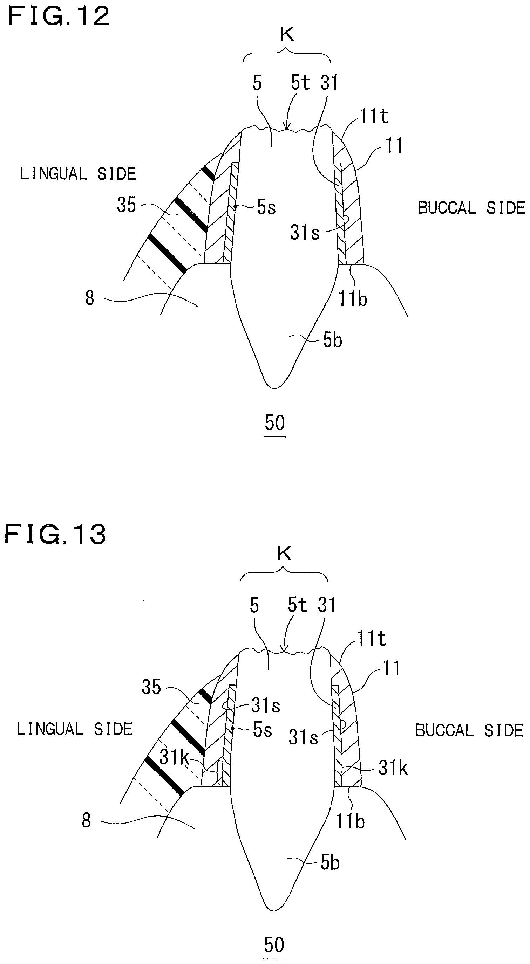

Fig. 12 is a cross-sectional view taken along the line XII-XII in Fig. 11. Fig. 12 corresponds to Fig. 2A in the first reference embodiment. The second reference embodiment differs from the first embodiment in that the metallic covering 31 of the clasped tooth K covers only a side surface 5s of the patient's tooth 5, not covering the top portion 5t thereof, as described above. Therefore, in the case where the remaining tooth used for forming the clasped tooth K is a vital tooth, it can be used as the clasped tooth without removing the nerve. The vital tooth with a nerve is much healthier than a non-vital tooth, and it is possible to maintain the normal state for a longer period of time. As a result, the clasped tooth K(31) as well as the underlying tooth 5 can be greatly improved in durability.

The above-described features <F1> through <F4> of the first embodiment can be maintained in the second embodiment as well. As to the occlusion discussed in (i) in <F2>, the vital tooth 5 has already undergone the occlusal adjustment, and only a fine adjustment will be necessary in an abnormal case. That is, the occlusal adjustment is almost unnecessary.

### <First Modification of Second Reference Embodiment>

Fig. 13 is a cross-sectional view of a partial denture mounting structure, as a reference example, according to a first modification of the second reference embodiment. Referring to Fig. 13, while the metallic covering 31 has a tapered surface 31s at an upper portion, the surface having a taper angle of not less than 1° and not more than 8° as described above, the taper angle is not maintained at the root portion. Rather, the metallic covering 31 has a bottom-part tapered surface 31k at the root portion, which surface is upright. Providing such an upright bottom-part tapered surface 31k, instead of extending the upper-part taper downward, ensures that the stress is more reliably focused on the root portion of the clasped tooth K(31). As a result, it is possible to further reduce the load on the clasped tooth K(31) or on the underlying tooth 5.

### <Second Modification of Second Reference Embodiment>

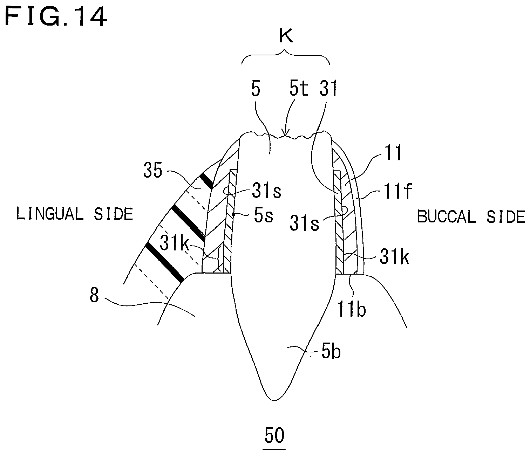

Fig. 14 is a cross-sectional view of a partial denture mounting structure 50, as a reference example, according to a second modification of the second reference embodiment. Referring to Fig. 14, a white covering 11f is applied onto the buccal side of the metallic fitting member 11. The covering 11fis preferably made of white resin or ceramic. With the white covering 11f, the metallic fitting member 11 is improved in aesthetics as the white color stands out.

### <Third Reference Embodiment>

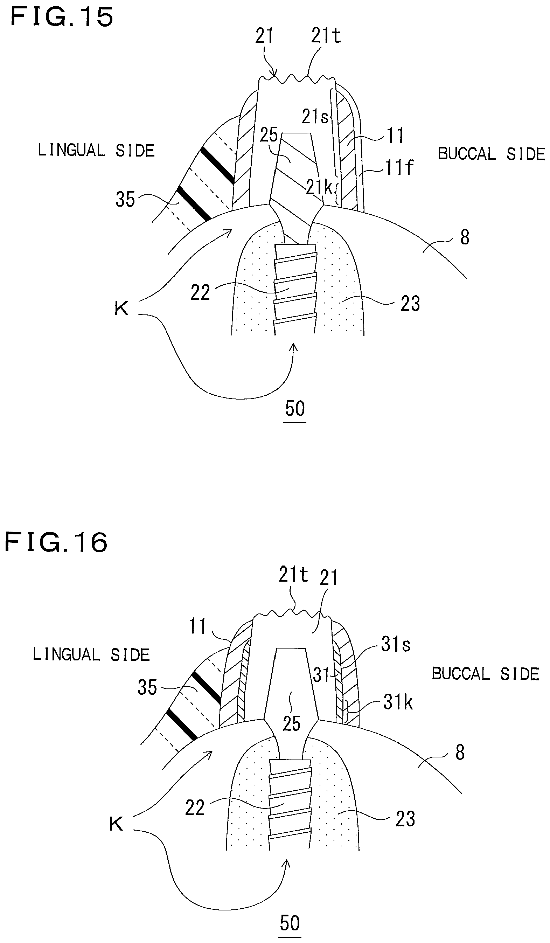

Fig. 15 is a cross-sectional view of a partial denture mounting structure 50 according to a third reference embodiment. A primary feature of the present embodiment is that an artificial tooth 21 supported by an implant is used for forming a clasped tooth K. The implant is an artificial tooth root, which is secured to a bone (jawbone or cheekbone) 23 by means of a fixture 22 made of a metal such as titanium alloy. The fixture 22 is in a sharp drill shape, which is screwed into the bone and fixedly secured thereto. On the fixture 22, an abutment 25 is secured, which holds the artificial tooth 21. The artificial tooth 21 is firmly secured within the oral cavity of a patient by the bone 23, fixture 22, and abutment 25. The artificial tooth 21 has a top portion 21t at which an occlusal surface is formed.

In the present embodiment, the clasped tooth K is formed using an implant-supported artificial tooth 21. The artificial tooth 21 constituting the clasped tooth K is not covered with a metallic covering. That is, a cylindrical fitting member 11 is directly fitted onto the artificial tooth 21, or, the artificial tooth 21 penetrates through the cylindrical fitting member 11. The artificial tooth 21 can be shaped with less constraint than a remaining tooth. Particularly, it is easy to form an upwardly tapered surface 21s on the side peripheral surface of the artificial tooth 21. It is also easy to provide a bottom-part tapered surface 21k at the root portion thereof.

The cylindrical fitting member 11 is fitted onto the side peripheral surface of the artificial tooth 21. The upwardly tapered surface 21s is formed on the artificial tooth 21, which surface extends downward from its top portion. The tapered surface 21s has a taper angle of not less than 1° and not more than 8°. This taper angle, however, is not maintained at the root portion. An upright bottom-part tapered surface 21k is formed at the root portion. Providing such an upright bottom-part tapered surface 21k, instead of extending the upper-part taper downward, ensures that the stress is focused on the root portion of the clasped tooth K more reliably. It is noted that the bottom-part taper does not necessarily have to be upright (with a tilt angle of 0°), as long as it has a taper angle smaller than that of the upper-part tapered surface 21s (so as to be almost upright).

Generally, an implant is susceptible to periodontal diseases, and large moment acting on the root portion would promote the diseases. When the tapered surface formed on the side peripheral surface of the artificial tooth 21 is made to have an upright posture at the tooth root portion, as shown in Fig. 15, the moment acting on the artificial tooth root 25, 22, 23 can be kept small. As a result, it is possible to prevent the periodontal and other diseases while using the implant-supported artificial tooth 21 as the clasped tooth K.

Above all, an implant can increase the degree of freedom of arrangement of a clasped tooth within the oral cavity. For example, even in the case where all teeth are missing (14 teeth missing), it is possible to form a partial denture mounting structure by preparing a single implant-supported artificial tooth and using it as a clasped tooth K, instead of forming a full denture. In this case, the partial denture is naturally in the form of a partial denture replacing 13 missing teeth. As such, when a single implant-supported artificial tooth 21 is used as the clasped tooth K, the patient is freed from problems caused by a full denture, and can obtain a partial denture that is excellent in wearing feeling and that allows the wearer to enjoy tasting food with stable occlusion.

Another feature of the present embodiment is that the surface on the buccal side of the cylindrical fitting member 11 is covered with a white covering 11f. Such a white covering is called a facing. As the name suggests, the facing is normally arranged only on the buccal side or the front side. The white covering may be made of a resin or ceramic. Using the white covering 11f can improve the aesthetics, as the white colors of the artificial tooth 21 and the fitting member 11 stand out.

### <Modification of Third Reference Embodiment>

Fig. 16 is a cross-sectional view of a partial denture mounting structure 50, as a reference example, according to a modification of the third reference embodiment. Referring to Fig. 16, an implant-supported artificial tooth is used for a clasped tooth K, as in Fig. 15. In the modification, however, the artificial tooth 21 constituting the clasped tooth K is provided with a metallic covering. More specifically, the side peripheral surface of the artificial tooth 21 is covered with the metallic covering 31, and a cylindrical fitting member 11 is fitted onto the clasped tooth. The metallic covering 31 constituting the clasped tooth has an upwardly tapered surface 31s from the top portion down to an intermediate portion. The tapered surface 31s has a taper angle of not less than 1° and not more than 8°. The taper angle, however, is not maintained at the root portion. An upright bottom-part tapered surface 31k is formed at the root. Providing such an upright bottom-part tapered surface 31k, instead of extending the upper-part taper down to the bottom, ensures that the stress is focused on the root portion of the clasped tooth K more reliably.

As a result, the moment around the artificial tooth root 25, 22, 23 can be kept small. Accordingly, it is possible to prevent periodontal and other diseases while using the implant-supported artificial tooth 21 as the clasped tooth K.

### <Fourth Reference Embodiment>

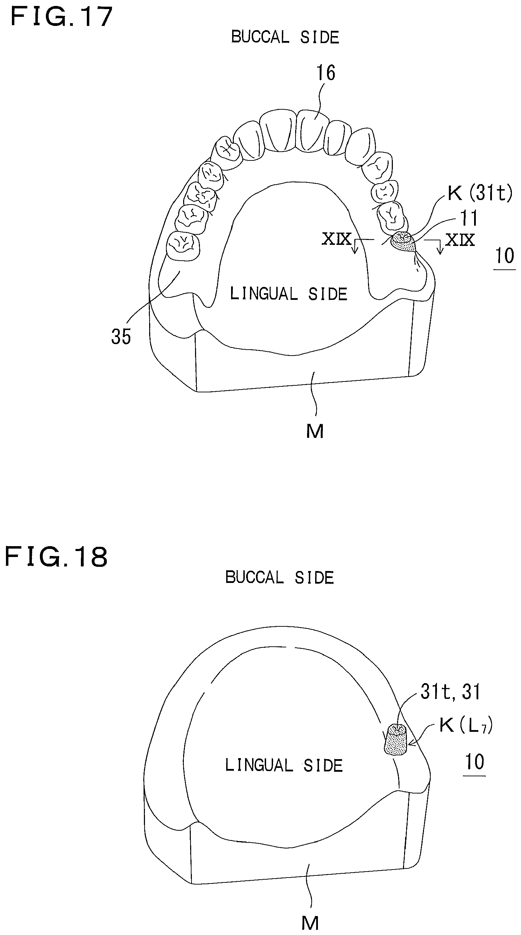

Fig. 17 is a perspective view of a partial denture mounting structure 50 according to a fourth reference embodiment. In Fig. 17, a plaster model M represents a patient's upper jaw on which a partial denture 10 is mounted. A primary feature of the present embodiment is that one remaining tooth is used to form a clasped tooth K. Fig. 18 shows the state where the remaining tooth is covered with a metallic covering 31 so as to obtain the clasped tooth K. In Fig. 17, a fitting member 11 has been fitted onto the clasped tooth K.

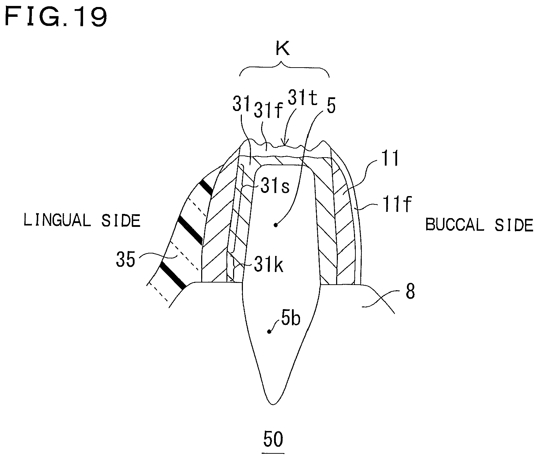

As seen from the cross-sectional view in Fig. 19, the metallic covering 31 has a tapered surface 31s at an upper portion, which surface has a taper angle of not less than 1° and not more than 8° as described above. The taper angle, however, is not maintained at the root portion. The metallic covering 31 has a tapered surface 31k at the root portion, in which the taper angle is made smaller than in the upper portion or made zero, or, upright. Providing such a bottom-part tapered surface 31k having a smaller taper angle or an upright shape, instead of extending the upper-part tapered surface 31s downward, ensures that the stress is focused on the root portion of the clasped tooth K(31) more reliably. As a result, it is possible to further reduce the load on the clasped tooth K(31) or on the underlying tooth 5.

In the case where there is only one remaining tooth, the partial denture would likely move. If such a movement causes a stress to be laterally applied to the upper portion of the clasped tooth K, the moment around the tooth root will increase, leading to an increased load on the clasped tooth K. However, when the taper is configured such that the stress will be applied, not to the upper portion of the remaining tooth or the clasped tooth K, but to the root portion thereof, the load on the single remaining tooth or the clasped tooth can be decreased, and the remaining tooth can be protected. Accordingly, a partial denture mounting structure with high durability is implemented.

### <First Embodiment>

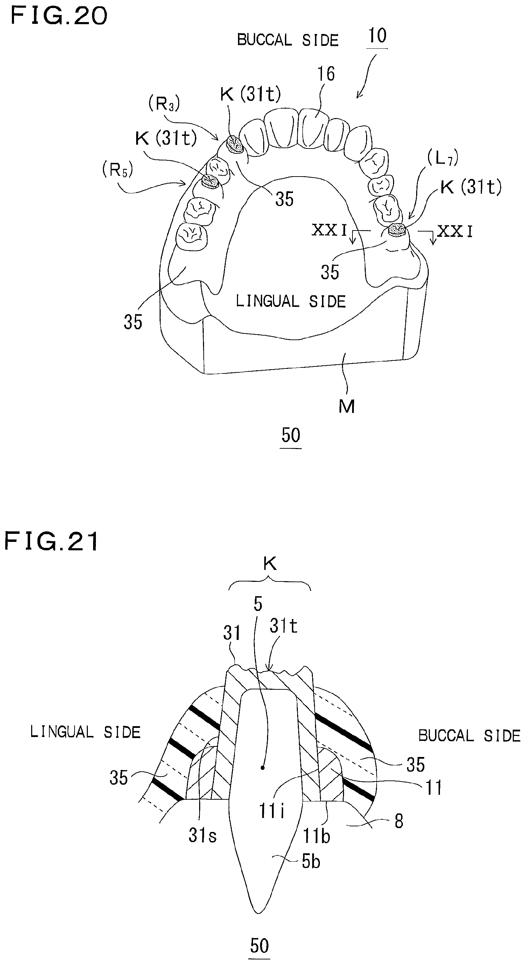

Fig. 20 is a perspective view of a partial denture mounting structure 50 according to a first embodiment of the present invention. In Fig. 20, a plaster model M represents a patient's upper jaw on which a partial denture 10 is mounted. The mounting structure 50 is formed as the partial denture 10 is mounted on teeth in the oral cavity of the plaster model M. More specifically, three clasped teeth K are prepared in this example, which teeth K penetrate through corresponding fitting members (invisible in Fig. 20 as they are surrounded by a denture base 35) to implement the mounting structure 50. The clasped teeth K correspond to the patient's left seventh tooth (L₇), right third tooth (R₃), and right fifth tooth (R₅). These three teeth K are each covered with a clasped-tooth covering member 31, as will be described below. While the clasped-tooth covering member 31 may be made of any material, a metallic covering 31 is often used, as it is easy to manufacture and offers high durability. In the example shown in Fig. 20, the partial denture 10 is safely held in place with the three clasped teeth K(31) as the major fitting locations.

The partial denture 10 has ring-shaped fitting members, or, ring members 11, and each clasped tooth K(31) penetrates through the corresponding ring member 11, with a top portion 31t of the tooth exposed. As the clasped teeth K enter into and penetrate through the ring members 11, the fitting is implemented, and the partial denture 10 is mounted on the clasped teeth K.

Fig. 21 is a cross-sectional view of the left seventh (L₇) clasped tooth K(31) shown in Fig. 20. A primary feature of the present embodiment is that the ring member 11 is fitted onto the root portion of the clasped tooth K, as shown in Fig. 21.

The denture base 35 has its back surface coming into close contact with the mucosa of the residual ridge 8. The bottom end 11b of the ring member 11 is in flush with the back surface of the denture base 35. The patient's left seventh tooth 5 has a root 5b, but it is a non-vital tooth with no nerve. Further, the tooth 5 is entirely covered with a metallic covering 31 from its top. On the top portion 31t of the metallic covering 31, an occlusal surface is formed. The side peripheral surface of the covering 31 has a tapered surface 31s that tapers upward from the root, to thereby form a smooth conical surface (side peripheral surface) with metallic luster. The conical surface is configured to have a (taper) angle of not less than 1° and not more than 8° with respect to the vertical direction. If the taper angle is less than 1°, it will often be difficult to dismount the partial denture. If the taper angle exceeds 8°, the retaining force will decrease, causing the partial denture to easily slip off. In particular, the taper angle of not less than 1° and not more than 3° can achieve an appropriate balance between the easiness in dismounting and the retaining force.

The denture base 35 surrounds the fitting member 11, to contribute to fixation of the fitting member 11. Generally, the fitting member 11 may be attached to the denture base 35 in any manner; for example, it may be fixedly secured to the denture base 35 in a well-known manner.

Using a ring member 11 as the fitting member provides the following advantages. According to the ring member 11 shown in Fig. 21, the ring member 11 is put onto the clasped tooth K, and it is naturally fitted to the root portion of the clasped tooth K. The top portion of the clasped tooth K protrudes largely from the ring member 11. This ensures that no stress is applied from the ring member 11 to the top and top corner portions of the clasped tooth; the stress is applied only to the lower part of the side peripheral surface. Accordingly, compared to the case where the stress is applied to the top portion of the clasped tooth, the moment around the root of the clasped tooth K is greatly reduced. The load on the clasped tooth K is small, and high durability can be maintained. Furthermore, compared to the case where the clasped tooth K is entirely covered with a covering (outer crown), the uncomfortable feeling in the oral cavity can naturally be reduced.

Moreover, occlusal adjustment can be carried out on the top portion 31t of the clasped tooth K, protruding from the ring member 11, for example at an early stage of fabrication, irrespective of the ring member 11, as previously described. The occlusal adjustment can readily be conducted, as in the above-described embodiments. Furthermore, in the case of the ring member 11, it can readily be embedded in and secured to the denture base 35. In this regard as well, the fabrication method described in the first embodiment in conjunction with Fig. 8 can be adapted.

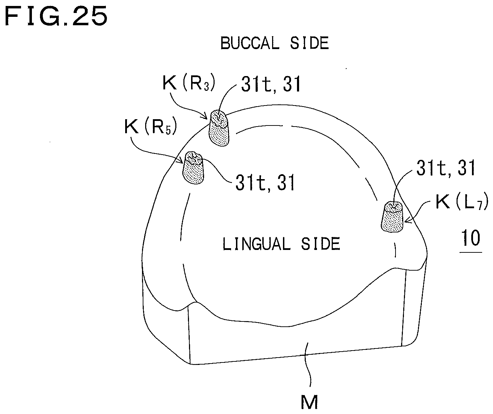

In forming a metallic covering 31, a tooth 5 is shaped using a dental cutting machine or the like, taking into consideration the balance inside the oral cavity, including the shape and size of the mounting structure 50 provided with the ring member 11. In Fig. 21, the tooth 5 has a regular shape corresponding to the covering 31. In practice, however, the tooth 5 may be deformed, or it may have a borehole as a result of treatment of cavity, as long as the tooth root 5b remains. The irregular shape of the tooth is absorbed by the inner surface of the metallic covering 31. Even in the case of such a deformed tooth 5, the external surface covered with the metallic covering 31 has an artificial conical side surface with metallic luster, excluding the top portion 31t. Therefore, it may be defined that the clasped tooth K(31) is substantially an "artificial truncated cone with a top portion provided with irregularities (sometimes referred to as petals) as a result of occlusal adjustment" (see Fig. 25).

Naturally, the inner surface 11i of the ring member 11 is tapered so as to match the tapered surface 31s of the clasped tooth K(31).

In most cases, a metal is a preferable material for the clasped-tooth covering member 31 for its manufacturability and durability as described above. While any of ordinary dental cast alloys such as gold-platinum alloy, gold-silver-palladium alloy, and other alloys may be used, gold-platinum alloy is most preferable among them.

As described above, the ring member 11 is fitted onto the clasped tooth K covered with the metallic covering 31 as the clasped tooth K(31) penetrates through the ring member 11 to protrude largely therefrom. It is noted that the fitting member and ring member are denoted by the same reference numeral 11. Needless to say, the fitting member 11 is located at (or, fixedly secured to) the partial denture 10. The ring member 11 is in contact with the lower portion of the side peripheral surface of the metallic covering 31 so as to surround the root portion of the clasped tooth K. Therefore, it is possible to make an occlusal surface on the top portion 31t of the metallic covering 31, irrespective of the ring member 11.

In most cases, a metal is also preferable as a material for the ring member 11 for its manufacturability and durability. While any of ordinary dental cast alloys such as gold-platinum alloy, gold-silver-palladium alloy, and other alloys may be used, gold-platinum alloy is most preferable among them.

In Fig. 21, the bottom portion 11b of the ring member 11 is illustrated to be in contact with the mucosa of the residual ridge 8. The ring member 11 may have such a structure that its end portion forms a plane to provide a surface contact. Alternatively, the bottom portion 11b of the ring member 11 may be apart from (or, floating on) the mucosa of the residual ridge 8 by 0.5 to 1 mm, for example. Still alternatively, the bottom portion 11b of the ring member 11 may have an end that is tapered such that the outer surface approaches the inner surface to thereby form a single edge. As such, the bottom portion 11b of the ring member 11 may be in a line shape rather than the end face. Furthermore, the tapered surface on the outer surface of the ring member 11 may be planer or convex.

The above description of the bottom portion 11b of the ring member 11 as well as the denture base 35 on the buccal side will apply to each mounting structure 50 which will be described below.

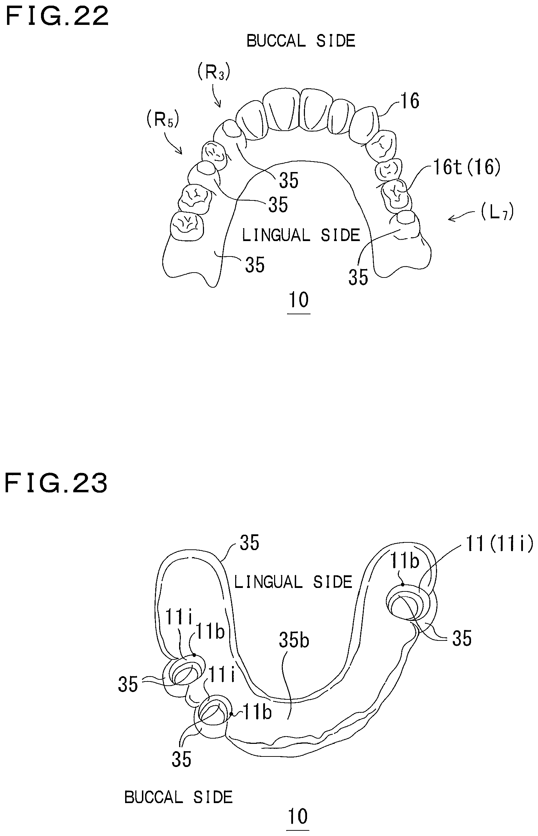

Fig. 22 is a perspective view of the partial denture 10 in Fig. 20, as seen from the front side. As described in conjunction with Fig. 20, ring members (invisible in Fig. 22) are arranged at the positions L₇, R₃, and R₅ corresponding to the clasped teeth.

Fig. 23 is a perspective view of the partial denture 10 in Fig. 22, as seen from the back side. The denture base 35 surrounds and secures the ring members 11. More specifically, the denture base 35 is provided on the buccal side as well, thereby firmly securing the ring members 11 to the denture base 35. As no artificial teeth are provided on the back side, the bottom end 11b and the inner surface 11i of each ring member 11 are visible clearly. The bottom end 11b is in flush with the back surface 35b of the denture base 35. As the ring member 11 extends to reach the back surface 35b of the denture base 35, the force from the ring member 11 can reliably be applied to the root portion of the clasped tooth K(31). As a result, it is possible to reduce the moment around the root 5b of the tooth 5 compared to the case where the stress acts on the entirety including the top portion of the clasped tooth K(31) as in a conventional konus telescope partial denture. Accordingly, the load on the tooth 5 forming the clasped tooth K(31) as well as the load on its root 5b can greatly be reduced, leading to improved durability. Furthermore, as the fitting member is a ring member 11 and also tapered upward, the stress is applied to the lower part of the clasped tooth. This can further reduce the load on the tooth root portion, and the uncomfortable feeling on the tooth can be greatly reduced. Moreover, as the fitting member is a ring member 11, the air between the fitting member and the clasped tooth will cause no obstruction at the time of wearing the partial denture.

In contrast, in a conventional konus telescope partial denture, the fitting member was an outer crown that completely covered the clasped tooth. This would apply large force to the top portion of the clasped tooth, possibly causing breakage of the root. Moreover, the air would not readily escape from between the outer crown and the clasped tooth at the time of wearing the denture.

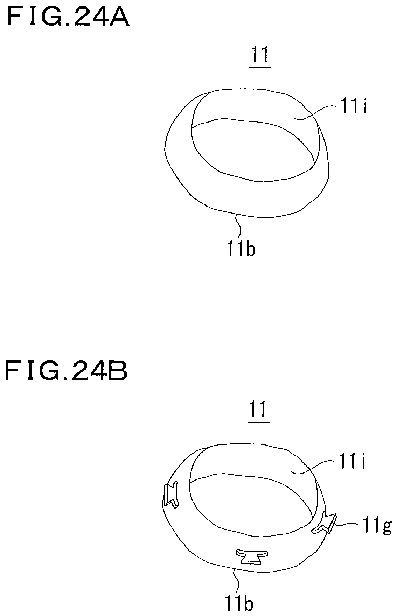

Figs. 24A and 24B show ring members 11. Fig. 24A shows an ordinary ring member 11, which has an inner surface 11i tapered to match the taper on the outer surface of the metallic covering 31 shown in Fig. 21. Although the ring member 11 shown in Fig. 24A will do, when at least one protruding portion 11g is provided on the outer peripheral surface as shown in Fig. 24B, the protruding portion 11g will enter into a rebase material or the denture base 35 and serve as an anchor after the rebase material solidifies. More specifically, once the rebase material that comes into one piece with the denture base 35 has solidified, the embedded ring member 11 would not readily slip off from the denture base 35. As such, it contributes to firm fixation of the ring member 11 to the denture base 35.

Fig. 25 shows the clasped teeth K(31), set on the plaster model M. In each clasped tooth K(31), a remaining tooth 5 is located with its root 5b. The clasped tooth K(31) is covered with a metallic covering 31, as described above. The top portion 31t of the metallic covering 31 is subjected to occlusal adjustment so as to provide an occlusal surface. The top portion 31t of the metallic covering 31 penetrates through the portion (hole) of the partial denture 10 where the ring member is fixedly secured (see Fig. 22), and protrudes upward from the ring member 11 to thereby serve as the occlusal surface. The clasped tooth K is covered with the metallic covering 31, which can reinforce the underlying tooth 5, thereby enabling a high strength to be maintained as a whole. Therefore, it is possible to firmly and stably hold the partial denture with a small number of teeth in combination with the ring members 11. As the load on the root portion of each clasped tooth is greatly reduced, as described above, the clasped tooth itself is also protected.

The metallic covering 31 of the clasped tooth K and the ring member 11 are both geometric and do not require delicate shape adjustment, except the occlusal surface 31t. Furthermore, the occlusion can be adjusted at the time of fabrication of the metallic covering 31, independently of the ring member 11, as described previously. Accordingly, the partial denture 10 can be fabricated relatively easily, without the need of special sense or expertise in dentistry. Particularly, after the metallic covering 31 is secured, it is only necessary to focus on the clasped tooth K, because the occlusal relation between the upper and lower teeth has already been determined. This facilitates the occlusion taking at a dental office.

In the case where a non-vital tooth is to be used for a clasped tooth, the non-vital tooth may be entirely covered with the metallic covering 31 from the top, as shown in Fig. 25, or alternatively, only the side peripheral surface of the non-vital tooth may be covered with the metallic covering 31.

### <First Modification of First Embodiment>

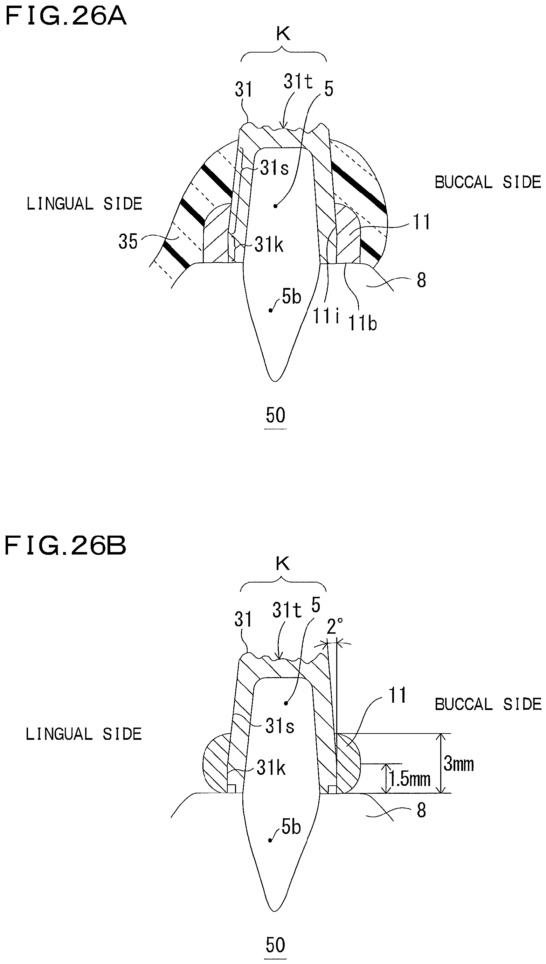

Fig. 26A is a cross-sectional view of a partial denture mounting structure 50 according to a first modification of the first embodiment of the present invention, and Fig. 26B shows exemplary dimensions and angles thereof, as an example of the present invention. Referring to Figs. 26A and 26B, a metallic covering 31 has a tapered surface 31s at an upper portion, which surface has a taper angle of not less than 1° and not more than 8° as described above. The taper angle, however, is not maintained at the root portion. Rather, a tapered surface 31k having a smaller taper angle or an upright shape is formed at the root portion of the metallic covering 31. In correspondence therewith, the inner surface 11i of the ring member 11 serving as the fitting member is provided with a two-part, upwardly tapered surface, which has an upper tapered section and a lower tapered section standing more upright than the upper tapered section.

Providing such a bottom-part tapered surface 31k having a smaller taper angle or an upright shape, instead of extending the upper-part tapered surface 31s downward, ensures that the stress is focused on the root portion of the clasped tooth K(31) more reliably. As a result, it is possible to further reduce the load on the clasped tooth K(31) or on the underlying tooth 5.

### <Second Modification of First Embodiment>

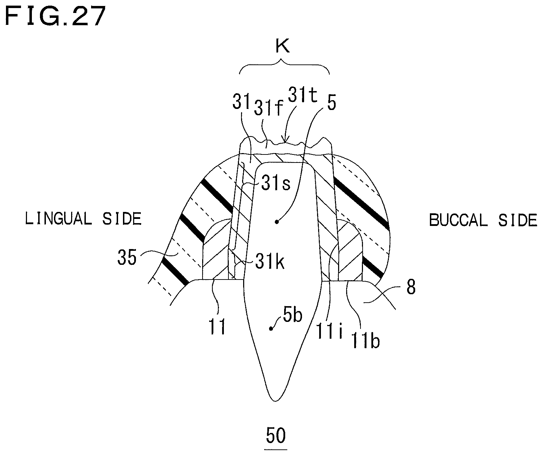

Fig. 27 is a cross-sectional view of a partial denture mounting structure 50, as an example of the present invention, according to a second modification of the first embodiment of the present invention. Referring to Fig. 27, a white covering 31f is applied onto the top portion 31t of the metallic covering 31. The covering 31f is preferably made of white resin or ceramic. With the white covering 31f, the top portion 31t of the metallic covering 31 is improved in aesthetics as the white color stands out.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

### INDUSTRIAL APPLICABILITY

According to the present invention, it is possible to implement, among others, a partial denture mounting structure which can reduce the load on a clasped tooth and exhibits high durability, which facilitates occlusal adjustment, and which can be fabricated without the need of special intuition or expertise in dentistry. Particularly, the portion corresponding to the outer crown in the konus telescope partial denture is formed as a cylindrical member, causing more stress to be applied to the root portion than to the top portion of the clasped tooth. This can reduce the moment around the root of the tooth, thereby greatly decreasing the load on the tooth. Further, the clasped tooth and the cylindrical fitting member (corresponding to the outer crown) have geometric shapes, which do not require delicate adjustment. The taper on the outer peripheral surface of the clasped tooth can be formed with high precision at a laboratory, using a dedicated tapering machine. Furthermore, the occlusal adjustment can be carried out on the clasped tooth, independently of the fitting member (corresponding to the outer crown), which facilitates the occlusal adjustment. As a result, the entire fabrication process, including the occlusal adjustment, can be made clear and easy to understand. Still further, in a special case, a vital tooth can be used for the clasped tooth, without removing the nerve therefrom, which contributes to improved durability.

Furthermore, particularly in the case where there is only one remaining tooth (with 13 teeth missing), the accompanying difficulties can be solved by the partial denture of the present invention. Still further, even in the case where a full denture would be otherwise needed, a signal implant can be provided, and the single implant-supported artificial tooth can be used as the clasped tooth, to thereby provide a partial denture excellent in wearing feeling. Patients would have had many serious problems as a large number of implants had to be implanted. The above-described configuration requiring only a single implant can overcome those problems.

### DESCRIPTION OF REFERENCE NUMERALS

5: tooth used for forming clasped tooth; 5b: root of tooth; 5s: side surface of tooth; 5t: top portion of tooth; 8: residual ridge; 10: partial denture; 11: fitting member (cylindrical member, ring member); 11b: bottom end of fitting member; 11f: ceramic (or resin); 11i: inner surface of fitting member; 11t: top portion (top surface) of fitting member; 16: artificial tooth; 21: implant-supported artificial tooth; 22: implant fixture; 23: bone (upper jaw or lower jaw); 25: abutment; 31: metallic covering for clasped tooth; 31s: (upper) tapered surface; 31k: lower surface; 31t: top portion (top surface) of clasped tooth; 35: denture base; 35b: back surface of denture base; 50: partial denture mounting structure; and K: clasped tooth.

## Claims

1. A partial denture mounting structure (50) including an artificial tooth (16), a denture base (35) that holds the artificial tooth (16), and a fitting member (11) fixedly secured to the denture base (35) and configured to be fitted to a clasped tooth (K), wherein said clasped tooth (K) is anyone of a remaining natural tooth and an artificial tooth (16) supported by an implant, covered by a clasped-tooth covering member (31) that is made of dental cast alloy, and said clasped-tooth covering member (31) has an artificial conical side surface, and
**characterized in that** said fitting member (11) is a cylindrical member, is made of dental cast alloy and is configured to cover at least a root portion of a side peripheral surface of the clasped tooth (K) covered by said clasped-tooth covering member (31) when fitted to the clasped tooth (K), making at least a top portion (5t) of the clasped tooth (K) exposed from said fitting member (11).

2. The partial denture mounting structure (50) according to claim 1, wherein the cylindrical member serving as the fitting member (11) is an cylindrical member having a height of less than 4 mm.

3. The partial denture mounting structure (50) according to claim 1 or 2, wherein the denture base (35) is configured to cover an outer surface of the fitting member (11), and the denture base (35) is configured to also cover a portion of the side peripheral surface of the clasped tooth (K) that extends above the portion to which the fitting member (11) is fitted.

4. The partial denture mounting structure (50) according to any of claims 1 to 3, wherein the fitting member (11) has a protruding portion (11g) provided on an outer peripheral surface thereof, and the fitting member (11) is surrounded by and fixedly secured to the denture base (35).

5. A partial denture (10) including an artificial tooth (16), a denture base (35) that holds the artificial tooth (16), and a fitting member (11) fixedly secured to the denture base (35), **characterized in that**
said fitting member (11) is made of dental cast alloy and the fitting member (11) is a cylindrical member configured to cover only a side peripheral surface of a clasped tooth (K).

6. The partial denture (10) according to claim 5, wherein the cylindrical member serving as the fitting member (11) is a cylindrical member having a height of less than 4 mm.

7. The partial denture (10) according to claim 5or 6, wherein the denture base (35) of the partial denture (10) is configured to cover an outer surface of the fitting member (11), and the denture base (35) is configured to also cover a portion of the side peripheral surface of the clasped tooth (K) that extends above the portion to which the fitting member (11) is fitted.

8. The partial denture (10) according to any of claims 5 to 7, wherein the cylindrical member serving as the fitting member (11) has a protruding portion (11g) provided on an outer peripheral surface thereof, and the fitting member (11) is fixedly secureable to the denture base (35) with the protruding portion (11g) embedded in the denture base (35).

9. The partial denture (10) according to any of claims 5 to 8, wherein the cylindrical member constituting the fitting member (11) is provided with an outer surface with a ceramic (11f) or resin (11f) thereon.

## Patentansprüche

1. Teilprothesenmontagestruktur (50), beinhaltend einen künstlichen Zahn (16), eine Prothesenbasis (35), welche den künstlichen Zahn (16) hält, und ein Anschlussteil (11), welches fest an der Prothesenbasis (35) angebracht ist und dazu eingerichtet ist, an einen umklammerten Zahn (K) angepasst zu werden, wobei der umklammerte Zahn (K) irgendeiner von verbleibenden natürlichen Zähnen und einem durch ein Implantat gestützten künstlicher Zahn (16) ist, der von einem Abdeckteil (31) für den umklammerten Zahn abgedeckt ist, welches aus zahnärztlicher Gusslegierung hergestellt ist, und das Abdeckteil (31) von dem umklammerten Zahn eine künstliche konische Seitenoberfläche aufweist, und
**dadurch gekennzeichnet, dass** das Anschlussteil (11) ein zylindrisches Teil ist, welches aus einer zahnärztlichen Gusslegierung hergestellt ist und dazu angepasst ist, mindestens einen Wurzelabschnitt einer peripheren Seitenoberfläche des umklammerten Zahns (K), welcher von dem Abdeckteil (31) von dem umklammerten Zahn abgedeckt ist, wenn es an den umklammerten Zahn (K) angepasst ist, abzudecken, wodurch mindestens ein Spitzenabschnitt (5t) des umklammerten Zahns (K) vom Anschlussteil (11) freigelegt ist.

2. Teilprothesen-Montagestruktur (50) gemäß Anspruch 1, wobei das zylindrische Bauteil, welches als das Anschlussteil (11) dient, ein zylindrisches Bauteil ist, welches eine Höhe von weniger 4 mm aufweist.

3. Teilprothesen-Montagestruktur (50) gemäß Anspruch 1 oder 2, wobei die Prothesenbasis (35) dazu eingerichtet ist, eine äußere Oberfläche des Anschlussteils (11) abzudecken, und die Prothesenbasis (35) dazu eingerichtet ist, ebenfalls einen Abschnitt der seitlichen Peripherieoberfläche des umklammerten Zahns (K), welcher über den Abschnitt, in welchem das Anschlussteil (11) angepasst ist, herausgeht, abzudecken.

4. Teilprothesen-Montagestruktur (50) gemäß einem der Ansprüche 1 bis 3, wobei das Anschlussteil (11) einen hervorstehenden Abschnitt (11g) aufweist, welcher auf der äußeren Peripherieoberfläche davon vorgesehen ist, und das Anschlussteil (11) von der Prothesenbasis (35) umgeben ist und an diese fest gesichert ist.

5. Teilprothese (10), beinhaltend einen künstlichen Zahn (16), eine Prothesenbasis (35), welche den künstlichen Zahn (16) hält, und ein Anschlussteil (11), welches an der Prothesenbasis (35) fest gesichert ist, **dadurch gekennzeichnet, dass** das Anschlussteil (11) aus einer zahnärztlichen Gusslegierung hergestellt ist und das Anschlussteil (11) ein zylindrisches Teil ist, welches dazu angepasst ist, nur eine seitliche Peripherieoberfläche eines umklammerten Zahns (K) abzudecken.

6. Teilprothese (10) gemäß Anspruch 5, wobei das zylindrische Teil, welches als das Anschlussteil (11) dient, ein zylindrisches Teil ist, welches eine Höhe von weniger als 4 mm aufweist.

7. Teilprothese (10) gemäß Anspruch 5 oder 6, wobei die Prothesenbasis (35) der Teilprothese (10) dazu eingerichtet ist, eine äußere Oberfläche des Anschlussteils (11) abzudecken, und die Prothesenbasis (35) dazu eingerichtet ist, ebenfalls einen Abschnitt der seitlichen Peripherieoberfläche des umklammerten Zahns (K) abzudecken, welche oberhalb des Abschnitts hervorsteht, an welchem das Anschlussteil (11) angepasst ist.

8. Teilprothese (10) gemäß einem der Ansprüche 5 bis 7, wobei das zylindrische Teil, welches als das Anschlussteil (11) dient, einen hervorstehenden Abschnitt (11g) aufweist, welcher auf einer äußeren Peripherieoberfläche davon vorgesehen ist, und das Anschlussteil (11) an die Prothesenbasis (35) mit dem hervorstehenden Abschnitt (11), welcher in die Prothesenbasis (35) eingebettet ist, fest sicherbar ist.

9. Teilprothese (10) gemäß einem der Ansprüche 5 bis 8, wobei das zylindrische Teil, welches das Anschlussteil (11) darstellt, mit einer äußeren Oberfläche mit Keramik (11f) oder Harz (11f) darauf vorgesehen ist.

## Revendications

1. Structure de montage de prothèse dentaire partielle (50) comprenant une dent artificielle (16), une base de prothèse dentaire (35) qui maintient la dent artificielle (16), et un élément d'ajustement (11) solidement fixé à la base de prothèse dentaire (35) et configurée pour être ajustée sur une dent de support de crochet (K), dans laquelle ladite dent de support de crochet (K) est l'une quelconque d'une dent naturelle restante et d'une dent artificielle (16) supportée par un implant, couverte par un élément de couverture de dent de support de crochet (31) qui est en alliage moulé dentaire, et ledit élément de couverture de dent de support de crochet (31) a une surface latérale conique artificielle, et
**caractérisée en ce que** ledit élément d'ajustement (11) est un élément cylindrique, est en alliage moulé dentaire et est configuré pour couvrir au moins une partie racine d'une surface périphérique latérale de la dent de support de crochet (K) couverte par ledit élément de couverture de dent de support de crochet (31) lorsqu'il est ajusté sur ladite dent de support de crochet (K), entraînant l'exposition d'au moins une partie supérieure (5t) de la dent de support de crochet (K) à partir dudit élément d'ajustement (11).

2. Structure de montage de prothèse dentaire partielle (50) selon la revendication 1, dans laquelle l'élément cylindrique servant d'élément d'ajustement (11) est un élément cylindrique ayant une hauteur inférieure à 4 mm.

3. Structure de montage de prothèse dentaire partielle (50) selon la revendication 1 ou 2, dans laquelle la base de prothèse dentaire (35) est configurée pour couvrir une surface extérieure de l'élément d'ajustement (11), et la base de prothèse dentaire (35) est configurée pour également couvrir une partie de la surface périphérique latérale de la dent de support de crochet (K) qui s'étend au-dessus de la partie sur laquelle l'élément d'ajustement (11) est ajusté.

4. Structure de montage de prothèse dentaire partielle (50) selon l'une quelconque des revendications 1 à 3, dans laquelle l'élément d'ajustement (11) a une partie en saillie (11g) fournie au niveau d'une surface périphérique de celle-ci, et l'élément d'ajustement (11) est entouré par et solidement fixé à la base de prothèse dentaire (35).

5. Prothèse dentaire partielle (10) comprenant une dent artificielle (16), une base de prothèse dentaire (35) qui maintient la dent artificielle (16), et un élément d'ajustement (11) solidement fixé à la base de prothèse dentaire (35), **caractérisé en ce que** ledit élément d'ajustement (11) est en alliage moulé dentaire et l'élément d'ajustement (11) est un élément cylindrique configuré pour ne couvrir qu'une surface périphérique latérale d'une dent de support de crochet (K).

6. Prothèse dentaire partielle (10) selon la revendication 5, dans laquelle l'élément cylindrique servant d'élément d'ajustement (11) est un élément cylindrique ayant une hauteur inférieure à 4 mm.

7. Prothèse dentaire partielle (10) selon la revendication 5 ou 6, dans laquelle la base de prothèse dentaire (35) de la prothèse dentaire partielle (10) est configurée pour couvrir une surface extérieure de l'élément d'ajustement (11), et la base de prothèse dentaire (35) est configurée pour également couvrir une partie de la surface périphérique latérale de la dent de support de crochet (K) qui s'étend au-dessus de la partie sur laquelle l'élément d'ajustement (11) est ajusté.

8. Prothèse dentaire partielle (10) selon l'une quelconque des revendications 5 à 7, dans laquelle l'élément cylindrique servant d'élément d'ajustement (11) a une partie en saillie (11g) fournie sur une surface périphérique extérieure de celle-ci, et l'élément d'ajustement (11) est solidement fixé à la base de prothèse de dentaire (35) avec la partie en saillie (11g) intégrée dans la base de prothèse dentaire (35).

9. Prothèse dentaire partielle (10) selon l'une quelconque des revendications 5 à 8, dans laquelle l'élément cylindrique constituant l'élément d'ajustement (11) est doté d'une surface extérieure avec une céramique (11f) ou une résine (11f) sur celui-ci.
